# EUROPEAN PATENT APPLICATION

(11) **EP 4 525 555 A1**
(43) Date of publication of application: **19.03.2025**
(21) Application number: 23812178.4
(22) Date of filing: 25.05.2023
(51) Int. Cl.: H05B 6/06, H05B 6/12, H02J 50/80, H02J 50/90, H02J 50/10, H05B 6/64

(54) **METHOD FOR LINKING AND CONTROLLING OPERATIONS OF PLURALITY OF WIRELESS POWER TRANSMISSION DEVICES, WIRELESS POWER TRANSMISSION DEVICE FOR PERFORMING SAME, AND SMALL APPLIANCE**

(30) Priority: 27.05.2022 KR 20220065645; 01.12.2022 KR 20220166036
(71) Applicant: Samsung Electronics Co., Ltd., Suwon-si, Gyeonggi-do 16677 (KR)
(72) Inventor: CHOO, Hyunjoon, Suwon-si, Gyeonggi-do 16677 (KR); KANG, Heejun, Suwon-si, Gyeonggi-do 16677 (KR); KIM, Dongwook, Suwon-si, Gyeonggi-do 16677 (KR); SHIN, Jaehee, Suwon-si, Gyeonggi-do 16677 (KR); KANG, Dongoh, Suwon-si, Gyeonggi-do 16677 (KR); KIM, Yongwook, Suwon-si, Gyeonggi-do 16677 (KR); KIM, Jaejin, Suwon-si, Gyeonggi-do 16677 (KR); KIM, Kanghoon, Suwon-si, Gyeonggi-do 16677 (KR); YU, Sojeong, Suwon-si, Gyeonggi-do 16677 (KR); HA, Jonghun, Suwon-si, Gyeonggi-do 16677 (KR)
(74) Representative: Walaski, Jan Filip
(86) International application number: PCT/KR2023/007206
(87) International publication number: WO 2023/229404

(57) **Abstract**

A method, performed by a wireless power transmission apparatus, of performing a cooking operation, includes detecting a cooking appliance, establishing a communication connection with the detected cooking appliance, obtaining operation history information corresponding to the cooking appliance, and transmitting power to the cooking appliance based on the operation history information.

## Description

### Technical Field

The disclosure relates to a method of linking and controlling operations of a plurality of wireless power transmission apparatuses, and a wireless power transmission apparatus and a small appliance for performing the method.

### Background Art

A wireless power transmission apparatus also referred to as an induction cooker, a power plate, or a power station may include an apparatus for transmitting power to a cooking appliance so as to heat a container capable of induction heating (IH) or to operate a heater or motor included in the cooking appliance.

Recently, cases where a plurality of wireless power transmission apparatuses are used in one kitchen have increased. When using a plurality of wireless power transmission apparatuses, a user may move, if needed, a cooking appliance to another wireless power transmission apparatus while cooking food. For example, when the user needs to start cooking another menu while cooking a specific menu using a wireless power transmission apparatus with a highest output and the menu to be newly started needs a high output, the user may move a cooking appliance currently used to another wireless power transmission apparatus with a lower output.

When the user moves a cooking appliance to another wireless power transmission apparatus while cooking is performed as a wireless power transmission apparatus is controlled according to pre-set recipe information, a new wireless power transmission apparatus is unable to determine information about previous cooking processes, and thus, to complete the remaining cooking, the user needs to directly control the wireless power transmission apparatus or input new recipe information.

### Disclosure

### Technical Solution

A method, performed by a wireless power transmission apparatus, of performing a cooking operation, according to an embodiment of the present disclosure, includes detecting a cooking appliance, establishing a communication connection with the detected cooking appliance, obtaining operation history information corresponding to the cooking appliance, and transmitting power to the cooking appliance based on the operation history information.

A wireless power transmission apparatus according to an embodiment of the present disclosure includes a user interface configured to receive an input from a user and display information about a cooking operation, at least one operating coil configured to transmit power to a cooking appliance, a communication interface configured to perform communication with at least one of the cooking appliance, a server, and another wireless power transmission apparatus, a memory storing a program for performing the cooking operation by transmitting power to the cooking appliance, and at least one processor, wherein the at least one processor is configured to execute the program to detect the cooking appliance, establish a communication connection with the detected cooking appliance, obtain operation history information corresponding to the cooking appliance, and transmit power to the cooking appliance based on the operation history information.

A computer-readable recording medium, according to an embodiment of the present disclosure, has stored therein a program for executing, on a computer, at least one embodiment of the method.

A computer program according to an embodiment of the present disclosure is stored in a medium to execute, on a computer, at least one embodiment of the method.

### Description of Drawings

FIGS. 1 and 2 are diagrams illustrating an example system environment for linking and controlling operations of wireless power transmission apparatuses, according to an embodiment of the present disclosure.
FIGS. 3A, 3B and 3C are diagrams illustrating example configurations of a cooking appliance (small appliance) and a wireless power transmission apparatus, according to an embodiment of the present disclosure.
FIG. 4 is a block diagram illustrating an example configuration of a cooking appliance (small appliance), according to an embodiment of the present disclosure.
FIG. 5 is a block diagram illustrating an example configuration of a wireless power transmission apparatus, according to an embodiment of the present disclosure.
FIGS. 6, 7A, 7B, 8A, 8B, 8C, 8D and 9 are diagrams illustrating example processes of continuously performing, when a cooking appliance is moved from a first wireless power transmission apparatus to a second wireless power transmission apparatus, cooking previously performed by the first wireless power transmission apparatus, according to an embodiment of the present disclosure.
FIGS. 10 and 11 are signal flow diagrams illustrating example operations performed depending on whether operation history information is present after a cooking appliance is detected by a second wireless power transmission apparatus, according to an embodiment of the present disclosure.
FIGS. 12, 13, 14, 15 and 16 are flowcharts illustrating an example method of linking and controlling operations of a plurality of wireless power transmission apparatuses, according to an embodiment of the present disclosure.
FIG. 17 is a signal flow diagram for describing operations performed between wireless power transmission apparatuses and a cooking appliance when the cooking appliance is moved to a second wireless power transmission apparatus while being used by a first wireless power transmission apparatus, according to an embodiment of the present disclosure.
FIG. 18 is a signal flow diagram illustrating an example in which a first wireless power transmission apparatus requests a second wireless power transmission apparatus to start powering, upon detecting removal of a cooking appliance according to various embodiments;
FIG. 19 is a signal flow diagram illustrating an example in which remaining cooking information is displayed on a user interface (UI) of a second wireless power transmission apparatus and a remaining cooking operation is performed upon receiving a confirmation input of a user according to various embodiments;
FIG. 20 is a signal flow diagram illustrating an example in which a server revises operation history information based on device information of a second wireless power transmission apparatus and transmits the same to the second wireless power transmission apparatus according to various embodiments;
FIG. 21 is a signal flow diagram illustrating an example in which a cooking appliance revises operation history information based on device information of a second wireless power transmission apparatus and transmits the same to the second wireless power transmission apparatus according to various embodiments;
FIG. 22 is a signal flow diagram illustrating an example in which a server revises operation history information based on device information of a second wireless power transmission apparatus and sensing information of a cooking appliance, and transmits the same to the second wireless power transmission apparatus according to various embodiments;
FIG. 23 is a signal flow diagram illustrating an example in which a cooking appliance revises operation history information based on device information of a second wireless power transmission apparatus and sensing information of a cooking appliance, and transmits the same to the second wireless power transmission apparatus according to various embodiments;
FIG. 24 is a signal flow diagram illustrating an example operation when a communication connection between a wireless power transmission apparatus and a cooking appliance is disconnected and connected again during cooking, according to various embodiments;
FIGS. 25, 26, 27, 28, 29 and 30 are diagrams illustrating example processes in which a cooking operation is temporarily stopped and resumed according to a request of a user while a cooking appliance performs a cooking operation on a wireless power transmission apparatus, according to various embodiments;
FIGS. 31, 32 and 33 are diagrams illustrating example operations performed in a situation where a communication connection between a wireless power transmission apparatus and a cooking appliance is disconnected and reconnected while the cooking appliance performs a cooking operation on the wireless power transmission apparatus, according to an embodiment of the present disclosure.
FIGS. 34 and 35 are flowcharts illustrating an example method by which a cooking appliance controls a wireless power transmission apparatus, according to an embodiment of the present disclosure.
FIG. 36 is a table illustrating an example basic format of recipe information, according to an embodiment of the present disclosure.
FIG. 37 is a table illustrating an example basic format of cooking appliance status information, according to an embodiment of the present disclosure.
FIG. 38 is a table illustrating an example basic format of device information of a wireless power transmission apparatus, according to an embodiment of the present disclosure.
FIG. 39 is a diagram illustrating an example method of revising recipe information, based on device information of a wireless power transmission apparatus, according to an embodiment of the present disclosure.
FIG. 40 is a diagram illustrating an example method of revising cooking appliance status information, based on device information of a wireless power transmission apparatus, according to an embodiment of the present disclosure.

### Mode for Invention

While describing embodiments, technical content that is well-known in the art and not directly related to the present disclosure may not be provided. By omitting the unnecessary description, the gist of the present disclosure may be more clearly conveyed without obscuring the subject matter. Also, terms used below are defined in consideration of functions in the present disclosure, and may have different meanings according to an intention of a user or operator, customs, or the like. Therefore, the terms used herein have to be defined based on the meaning of the terms together with the description throughout the disclosure.

Some elements are exaggerated, omitted, or schematically illustrated in drawings. Also, the size of each component does not completely reflect the actual size. In the drawings, like elements are denoted by like reference numerals.

The advantages and features of the present disclosure and methods of achieving them will become apparent with reference to embodiments described in detail below with reference to the accompanying drawings. However, the present disclosure is not limited to the embodiments described below, and may be implemented in other various different forms. The embodiments are provided to complete the present disclosure and to fully inform one of ordinary skill in the art of the scope of the present disclosure. An embodiment of the present disclosure may be defined according to claims. Throughout the disclosure, like reference numerals denote like elements. While describing an embodiment the present disclosure, detailed description of related well-known functions or configurations may be omitted when it is deemed that they may unnecessarily obscure the essence of the present disclosure. Also, terms used below are defined in consideration of functions in the present disclosure, and may have different meanings according to an intention of a user or operator, customs, or the like. Therefore, the terms used herein have to be defined based on the meaning of the terms together with the description throughout the specification.

According to an embodiment, blocks in flowcharts or combinations of the flowcharts may be performed by computer program instructions. The computer program instructions may be loaded into a processor of a general-purpose computer, special purpose computer, or other programmable data processing apparatus, and the instructions, which are executed via the processor of the computer or programmable data processing apparatus may generate means for implementing functions specified in the flowchart block(s). The computer program instructions may be stored in a computer-executable or computer-readable memory capable of directing a computer or another programmable data processing apparatus to implement a function in a particular manner, and thus the instructions stored in the computer-executable or computer-readable memory may also be capable of producing manufacturing items containing instruction units for performing the functions described in the flowchart block(s). The computer program instructions may be mounted on a computer or another programmable data processing apparatus.

In addition, each block of the flowchart may represent a portion of a module, segment, or code that includes one or more executable instructions for executing specified logical function(s). In an embodiment, functions described in the blocks may be performed out of order. For example, two blocks illustrated successively may be executed substantially concurrently, or may be performed in a reverse order according to a function.

The term "unit" or "-er/or" used in an embodiment of the present disclosure may denote a software element or a hardware element such as a field-programmable gate array (FPGA) or an application-specific integrated circuit (ASIC), and may perform a certain function. Meanwhile, the term "unit" or "-er/or" is not limited to software or hardware. The "unit" or "-er/or" may be formed so as to be in an addressable storage medium, or may be formed so as to operate one or more processors. According to the disclosure, the term "unit" or "-er/or" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. Functions provided through a specific component or a specific "unit" or "-er/or" may be combined to reduce the number of the functions or may be separated into additional components. Also, in an embodiment, the "unit" or "-er/or" may include at least one processor.

Some terms frequently used in the present disclosure will be defined before starting the detailed description.

The term "cooking appliance" may include all containers or home appliances for cooking food. According to an embodiment, cooking appliances may include induction heating (IH) containers capable of IH and small appliances configured to perform communication using power received wirelessly and perform a cooking operation by operating a heater, a motor, and the like. Types of cooking appliances will be described in detail below.

A "wireless power transmission apparatus" may refer to an apparatus for transmitting power to a cooking appliance wirelessly. According to an embodiment, wireless power transmission apparatuses may include an induction cooker, a power plate, a power station, and the like.

"Operation history information" may refer to information about a history of operations performed by a wireless power transmission apparatus to cook a specific menu. According to an embodiment, the operation history information may include recipe information and cooking appliance status information.

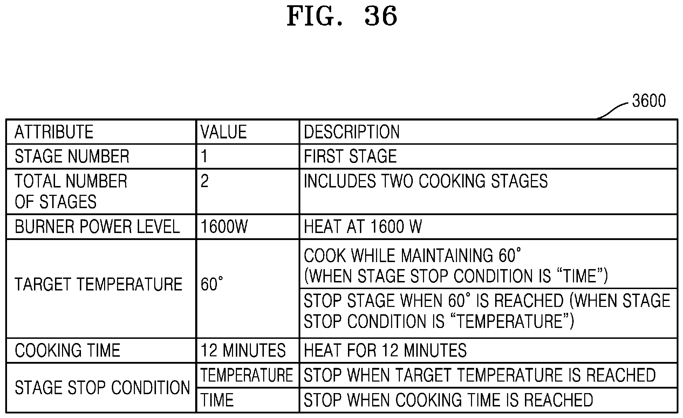

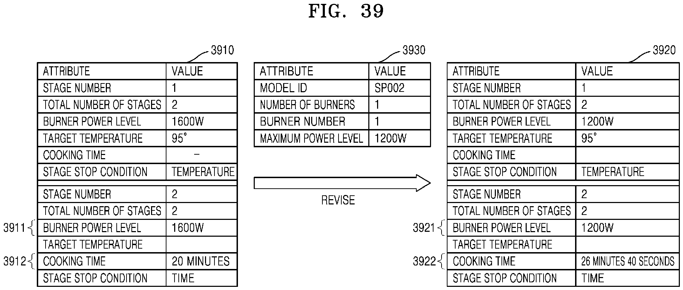

"Recipe information" may refer to information about power transmission control for cooking a specific menu, e.g., information required to control power transmission to cook the specific menu. For example, the recipe information may include information about how much power is to be transmitted to a cooking appliance and for how long, and information about how to control power transmission to maintain a temperature of the cooking appliance at a certain value. An example of a basic format 3600 of the recipe information is illustrated in FIG. 36. FIG. 36 illustrates attributes included in the recipe information and meanings indicated by values of the attributes. An example of the recipe information will be described below with reference to FIG. 39.

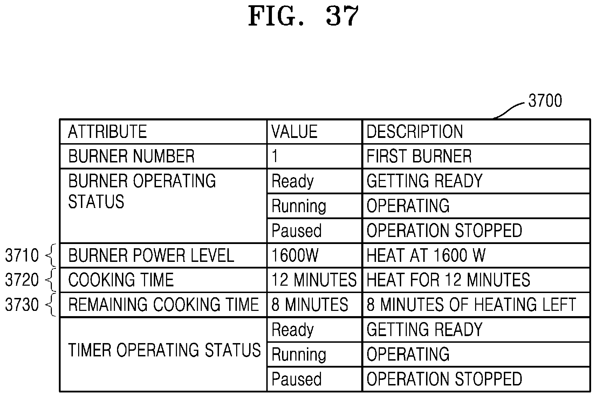

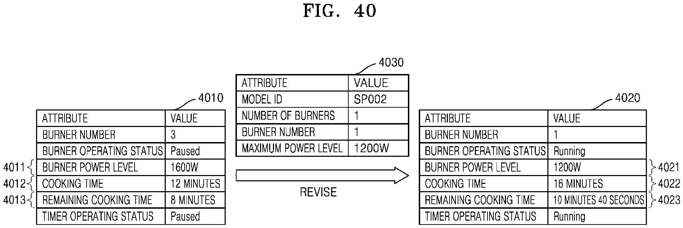

"Cooking appliance status information" may refer to information about a status in which a cooking operation is performed when a wireless power transmission apparatus transmits power to a cooking appliance. An example format 3700 of the cooking appliance status information is illustrated in FIG. 37. FIG. 37 illustrates attributes included in the cooking appliance status information and meanings indicated by values of the attributes. An example of the cooking appliance status information will be described below with reference to FIG. 40.

According to an embodiment, the cooking appliance status information may include cooking status information and remaining cooking information.

"Cooking status information" may refer to information indicating a current status in which a wireless power transmission apparatus has transmitted power to a cooking appliance according to recipe information. In other words, the cooking status information may include information about a cooking operation performed by a cooking appliance up to a specific time (e.g., a time when a cooking appliance is detected by a new wireless power transmission apparatus). For example, the cooking status information may include information about how much power has been transmitted to a cooking appliance and for how long, after cooking is started. The cooking status information may include a burner power level 3710 and a cooking time 3720 among the example format 3700 of the cooking appliance status information shown in FIG. 37. According to embodiments of the present disclosure, when the cooking status information is transmitted or received, the cooking appliance status information may be actually transmitted or received.

"Remaining cooking information" may refer to information about a remaining cooking operation and may denote information required to control power transmission so that remaining cooking is completed when cooking is stopped and started again due to movement of a cooking appliance or disconnection of a communication connection between a wireless power transmission apparatus and the cooking appliance. For example, the remaining cooking information may include information about how much power is to be transmitted to a cooking appliance and for how long so as to complete cooking a specific menu, and information about how to control power transmission to maintain a temperature of the cooking appliance at a certain value. The remaining cooking information may include the burner power level 3710 and a remaining cooking time 3730 among the example format 3700 of the cooking appliance status information shown in FIG. 37.

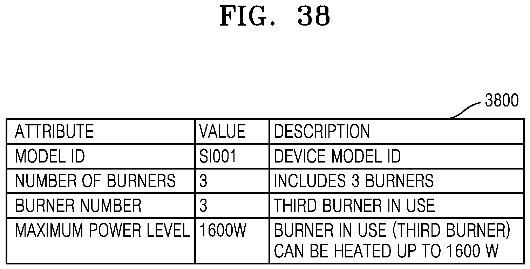

"Device information" of a wireless power transmission apparatus may refer to information including identification information, maximum output, and the like of the wireless power transmission apparatus. According to embodiments of the present disclosure, the device information of the wireless power transmission apparatus may be used while revising operation history information. For example, when the maximum output included in the device information is less than output required in recipe information, the recipe information may be revised to increase a time instead of decreasing the output. An example format 3800 of the device information is illustrated in FIG. 38. FIG. 38 illustrates attributes included in the device information and meanings indicated by values of the attributes. An example of the device information will be described below with reference to FIGS. 39 and 40.

Hereinafter, embodiments of the present disclosure will be described in greater detail with reference to accompanying drawings.

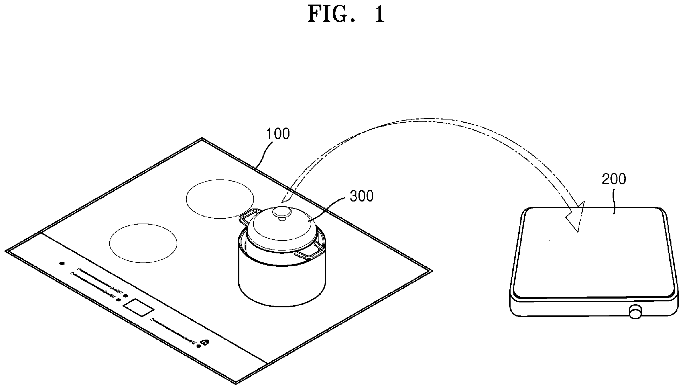

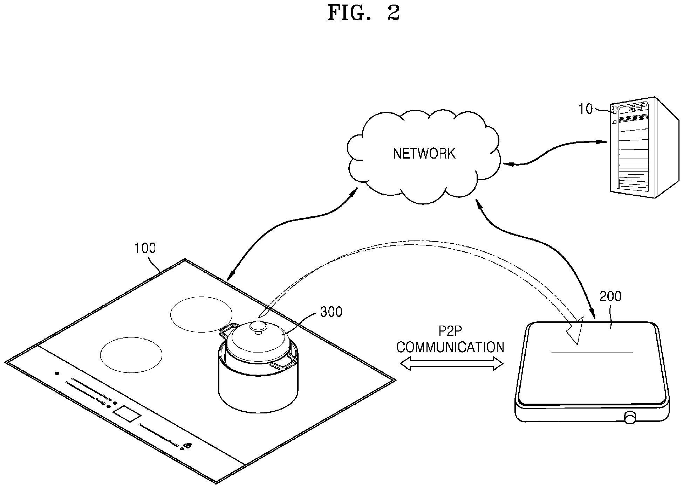

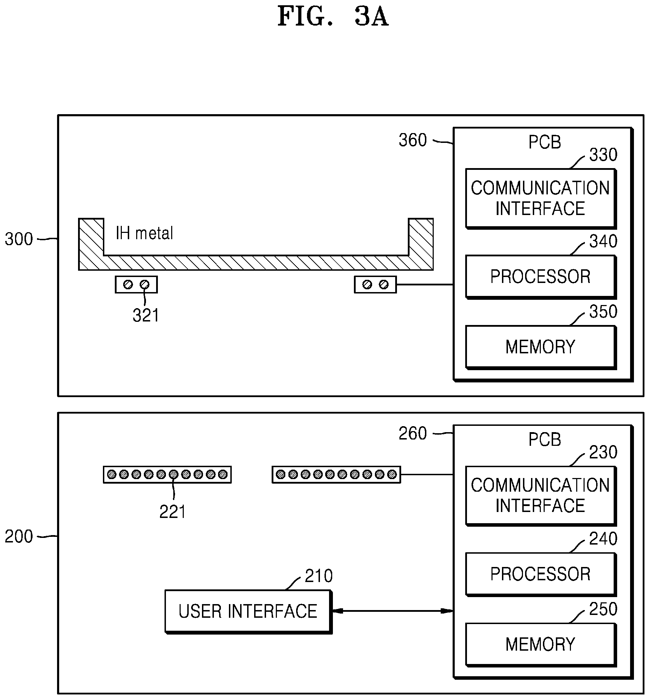

First, a system environment for linking and controlling operations of a plurality of wireless power transmission apparatuses, according to an embodiment of the present disclosure, will be described with reference to FIGS. 1 and 2, configurations of apparatuses (a wireless power transmission apparatus and a cooking appliance) included in a system will be described with reference to FIGS. 3A to 5, and various example embodiments will be described with reference to the remaining drawings.

FIGS. 1 and 2 are diagrams illustrating an example system environment for linking and controlling operations of wireless power transmission apparatuses, according to an embodiment of the present disclosure.

Referring to FIG. 1, a system may include a first wireless power transmission apparatus 100, a second wireless power transmission apparatus 200, and a cooking appliance 300. It is assumed that the cooking appliance 300 is performing a cooking operation while being placed on any one burner of the first wireless power transmission apparatus 100, and the cooking appliance 300 is moved to the second wireless power transmission apparatus 200 while cooking is not completed.

For example, while cooking food by placing the cooking appliance 300 on the first wireless power transmission apparatus 100, a user may move the cooking appliance 300 to the second wireless power transmission apparatus 200 to perform remaining cooking so as to cook another food on the first wireless power transmission apparatus 100. For example, the user may complete most of the cooking on the first wireless power transmission apparatus 100 and then move the cooking appliance 300 to the second wireless power transmission apparatus 200 at a place (e.g., on a table) where people eat to perform the remaining cooking. In addition, embodiments of the present disclosure may be applied to all situations where the cooking appliance 300 is moved to the second wireless power transmission apparatus 200 while cooking is performed in the cooking appliance 300 on the first wireless power transmission apparatus 100.

It is assumed that the cooking appliance 300 of FIG. 1 corresponds to a small appliance among an IH container and a small appliance described above. However, it will be apparent that an IH container may be used as the cooking appliance 300 when a small appliance is replaceable by the IH container because the cooking appliance 300 does not need to perform communication or the like, according to an embodiment of the present disclosure.

In the present disclosure, for convenience of description and to describe an example embodiment, it is assumed that maximum output of the first wireless power transmission apparatus 100 is 1600 W and maximum output of the second wireless power transmission apparatus 200 is 1200 W. The maximum output of the first and second wireless power transmission apparatuses 100 and 200 may affect revision of operation history information described below.

Referring to FIG. 2, the system may further include a server 10 capable of communicating with the first and second wireless power transmission apparatuses 100 and 200, and the cooking appliance 300. The first wireless power transmission apparatus 100 and the second wireless power transmission apparatus 200 may communicate with the server 10 through a network or the first and second wireless power transmission apparatuses 100 and 200 may perform peer-to-peer (P2P) communication. The cooking appliance 300 may also communicate with the server 10 through the network when a short-range wireless communication protocol, such as Wi-Fi, is supported. The cooking appliance 300 may communicate with the first wireless power transmission apparatus 100 or the second wireless power transmission apparatus 200 through a proximity communication protocol, such as Bluetooth low energy (BLE) or near field communication (NFC).

How the first wireless power transmission apparatus 100 and the second wireless power transmission apparatus 200 are linked and controlled to complete remaining cooking when the cooking appliance 300 is moved from the first wireless power transmission apparatus 100 to the second wireless power transmission apparatus 200 during cooking will be described in greater detail below with reference to a specific embodiment.

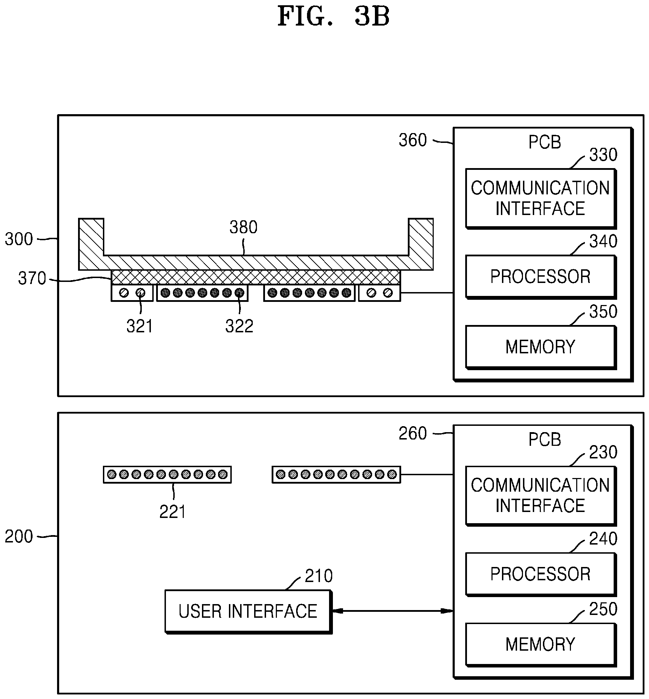

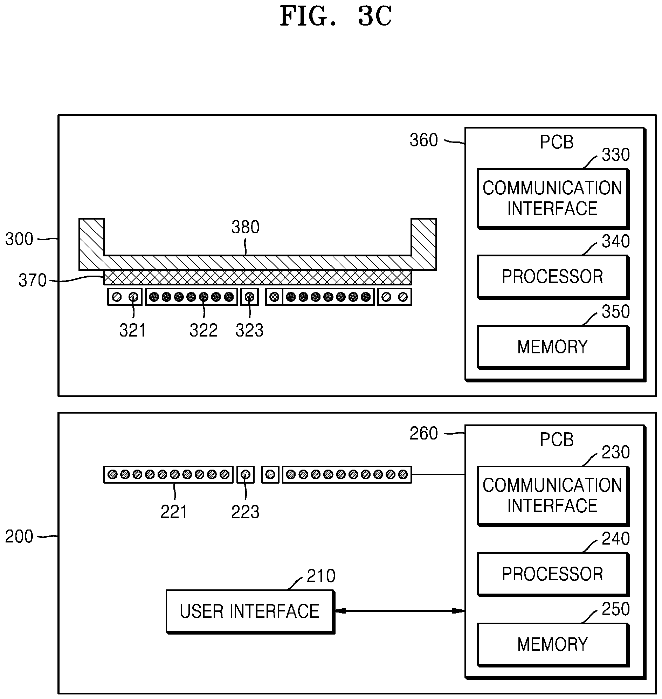

FIGS. 3A, 3B and 3C are diagrams illustrating example configurations included in a cooking appliance (small appliance) and a wireless power transmission apparatus, according to an embodiment of the present disclosure.

There may be various types of cooking appliances 300 depending on detailed components included therein, and FIGS. 3A, 3B and 3C (which may be referred to as FIGS. 3A to 3C) illustrate configurations of three example types of cooking appliances 300.

Referring to FIG. 3A, the cooking appliance 300 may include a container 380 for containing food, a printed circuit board (PCB) 360 on which a communication interface 330, a processor 340, and a memory 350 are mounted, and a pickup coil 321 configured to receive power from the wireless power transmission apparatus 200 and supply the same to the PCB 360.

Also, referring to FIG. 3A, the wireless power transmission apparatus 200 may include a user interface 210, a transmission coil (Tx coil) 221 configured to transmit power to the cooking appliance 300, and a PCB 260 on which a communication interface 230, a processor 240, and a memory 250 are mounted.

The container 380 of the cooking appliance 300 shown in FIG. 3A may be formed of an IH metal material and thus may be inductively heated by the power transmitted from the Tx coil 221 of the wireless power transmission apparatus 200, thereby cooking food.

The cooking appliance 300 may include its own power source, such as a battery, and when the cooking appliance 300 does not include its own power source, internal components thereof may operate according to the power transmitted by the wireless power transmission apparatus 200. For example, when the cooking appliance 300 approaches the wireless power transmission apparatus 200 and the pickup coil 321 receives power from the Tx coil 221, the power received by the pickup coil 321 is transmitted to the PCB 360 to operate the communication interface 330 and the processor 340. When the communication interface 330 is operated by the received power, a wireless communication (e.g., BLE) connection may be established with the communication interface 230 of the wireless power transmission apparatus 200.

Although not illustrated in FIG. 3A, the cooking appliance 300 may further include a sensor such as a temperature sensor. Values (e.g., a temperature) measured by the sensor included in the cooking appliance 300 may be used to control cooking food (e.g., control power transmission of a wireless power transmission apparatus).

Referring to FIG. 3B, the cooking appliance 300 may include the container 380 for containing food, the PCB 360 on which the communication interface 330, the processor 340, and the memory 350 are mounted, the pickup coil 321 configured to receive power from the wireless power transmission apparatus 200 and supply the same to the PCB 360, a load 370 configured to transmit heat to the container 380, and a reception coil (Rx coil) 322 configured to heat the load 370.

Also, the wireless power transmission apparatus 200 shown in FIG. 3B may include the user interface 210, the Tx coil 221 configured to transmit power to the cooking appliance 300, and the PCB 260 on which the communication interface 230, the processor 240, and the memory 250 are mounted.

Because the container 380 of the cooking appliance 300 shown in FIG. 3B is not formed of an IH metal material, the container 380 is unable to be heated by power transmitted by the wireless power transmission apparatus 200. Accordingly, the cooking appliance 300 shown in FIG. 3B may include the load 370 configured to transmit heat to the container 380, and the load 370 may be heated by power received by the Rx coil 322 from the Tx coil 221 of the wireless power transmission apparatus 200. FIG. 3B illustrates the cooking appliance 300 including the load 370 (e.g., a heater) configured to transmit heat to the container 380, but alternatively, the cooking appliance 300 may include the load 370 (e.g., a motor) configured to provide electric power for cooking food (e.g., when a cooking appliance is a foam generator of a coffee maker).

Referring to FIG. 3C, the cooking appliance 300 may include the container 380 for containing food, the PCB 360 on which the communication interface 330, the processor 340, and the memory 350 are mounted, the pickup coil 321 configured to receive power from the wireless power transmission apparatus 200 and supply the same to the PCB 360, the load 370 configured to transmit heat to the container 380, the Rx coil 322 configured to heat the load 370, and an NFC coil 323 configured to perform NFC.

Also, the wireless power transmission apparatus 200 shown in FIG. 3C may include the user interface 210, the Tx coil 221 configured to transmit power to the cooking appliance 300, the PCB 260 on which the communication interface 230, the processor 240, and the memory 250 are mounted, and an NFC coil 223 configured to perform NFC.

The wireless power transmission apparatus 200 shown in FIG. 3C may receive data from the cooking appliance 300 through the NFC coil 223, and for example, may receive identification (ID) information of the cooking appliance 300 through NFC. The received ID information of the cooking appliance 300 may be used when obtaining operation history information, and details thereof will be described below.

Although not illustrated, it is possible to add only the NFC coil 323 to the cooking appliance 300 of FIG. 3A, and detailed components described above may be variously combined.

The first wireless power transmission apparatus 100 may also include a same configuration as the second wireless power transmission apparatus 200 shown in FIG. 3A, 3B, or 3C.

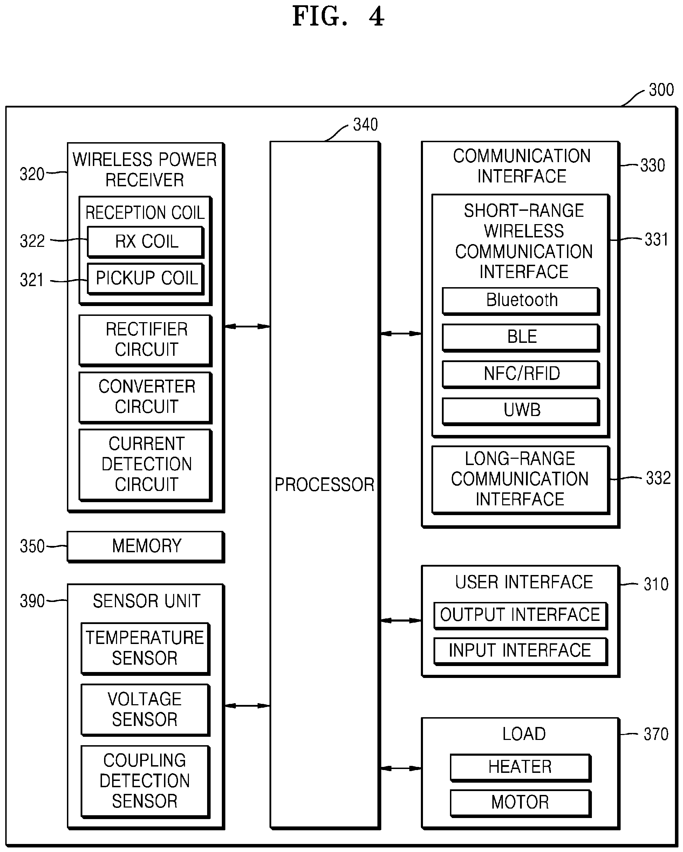

FIG. 4 is a block diagram illustrating an example configuration of a cooking appliance (small appliance), according to an embodiment of the present disclosure.

Referring to FIG. 4, the cooking appliance 300 according to an embodiment may include a user interface 310, a wireless power receiver 320, the communication interface 330, the processor 340, the memory 350, the load 370, and a sensor unit 390.

The wireless power receiver 320 may include the pickup coil 321 and the Rx coil 322, but is not limited thereto.

The pickup coil 321 may transmit power received from the wireless power transmission apparatus 200 to other components of the cooking appliance 300, excluding the load 370. Power received through the pickup coil 321 may be supplied to components of the wireless power transmission apparatus 200, excluding the load 370, through a rectifier circuit and a converter circuit. The Rx coil 322 may transmit power received from the wireless power transmission apparatus 200 to the load 370. Power received through the Rx coil 322 may be supplied to the load 370 through the rectifier circuit and the converter circuit.

The rectifier circuit may convert alternating power to direct power. For example, the rectifier circuit may convert an alternating voltage in which a size and polarity (a positive voltage or a negative voltage) change with time to a direct voltage in which a size and polarity are constant, and convert an alternating current in which a size and a direction (a positive current or a negative current) change with time to a direct current in which a size is constant. The rectifier circuit may include a bridge diode. For example, the rectifier circuit may include four diodes. The bridge diode may convert an alternating voltage in which polarity changes with time to a positive voltage in which polarity is constant, and convert an alternating current in which a direction changes with time to a positive current in which a direction is constant. The rectifier circuit may include a direct current (DC) link capacitor. The DC link capacitor may convert a positive voltage in which a size changes with time to a direct voltage having a constant size.

The converter circuit may include a switching circuit configured to transmit a current output from the pickup coil 321 or Rx coil 322 to other components or block the current, and a resonant circuit configured to generate resonance together with the pickup coil 321 or Rx coil 322.

A current detection circuit may include a current sensor configured to measure a current output from the converter circuit.

The processor 340 controls general operations of the cooking appliance 300. The processor 340 may execute programs stored in the memory 350 to control the wireless power receiver 320, the communication interface 330, the sensor unit 390, the user interface 310, and the memory 350.

According to an embodiment of the present disclosure, the cooking appliance 300 may include an artificial intelligence (AI) processor. The Al processor may be manufactured in the form of an Al dedicated hardware chip or manufactured as a part of an existing general-purpose processor (e.g., a central processing unit (CPU) or an application processor) or a graphic-dedicated processor (e.g., a graphics processing unit (GPU)) to be mounted on the wireless power transmission apparatus 200.

According to an embodiment of the present disclosure, the processor 340 may control the converter circuit to supply, to the communication interface 330 of the cooking appliance 300, power at a pre-set level to operate the communication interface 330.

In embodiments of the present disclosure, operations described to be performed by the cooking appliance 300 may be substantially performed by the processor 340.

The communication interface 330 may include one or more components enabling communication between the cooking appliance 300 and the wireless power transmission apparatus 200 or between the cooking appliance 300 and the server 10. For example, the communication interface 330 may include a short-range wireless communication interface 331 and a long-range communication interface 332.

The short-range wireless communication interface may include a Bluetooth communication interface, a BLE communication interface, an NFC/radio frequency identification (RFID) communication interface, or an ultra-wide band (UWB) communication interface, but is not limited thereto.

The long-range communication interface 332 may be used to communicate with a server device when the cooking appliance is controlled by the server 10 remotely in an Internet of things (IoT) environment. The long-range communication interface 332 may include the Internet, a computer network (e.g., a LAN or a wide area network (WAN)), and a mobile communication interface. The mobile communication interface may transmit or receive a wireless signal to or from at least one of a base station, an external terminal, and a server, on a mobile communication network. Here, the wireless signal may include various types of data according to exchange of a voice call signal, an image call signal, or a text/multimedia message. The mobile communication interface may include a 3rd generation (3G) module, a 4th generation (4G) module, a long-tern evolution (LTE) module, a 5th generation (5G) module, a 6th generation (6G) module, a node B (NB)-Internet of things (IoT) module, or an LTE-machine type communication (LTE-M) module, but is not limited thereto.

The sensor unit 390 may include a container detection sensor and a temperature sensor, but is not limited thereto.

The temperature sensor may measure a temperature of content (food) in the container 380 of the cooking appliance 300. According to an embodiment, the temperature sensor may be provided on an outer surface of the container 380. According to an embodiment of the present disclosure, the temperature sensor may include a thermistor in which an electric resistance value changes according to a temperature. For example, the temperature sensor may be a negative temperature coefficient (NTC) temperature sensor, but is not limited thereto. The temperature sensor may be a positive temperature coefficient (PTC) temperature sensor.

A voltage sensor may measure a voltage received from the wireless power transmission apparatus 200 and supplied to each component of the cooking appliance 300.

A coupling detection sensor may determine whether a separable or openable component from among components included in the cooking appliance 300 has been coupled.

The user interface 310 may include an output interface and an input interface. The output interface is for outputting an audio signal or a video signal and may include a display and a sound output unit.

When the display is configured as a touch screen by forming a layer structure with a touch pad, the display may be used as an input interface as well as an output interface. The display may include at least one of a liquid crystal display, a thin-film transistor-liquid crystal display, a light-emitting diode (LED), an organic light-emitting diode, a flexible display, a 3-dimensional (3D) display, and an electrophoretic display. Also, according to an embodiment of the wireless power transmission apparatus 200, the wireless power transmission apparatus 200 may include two or more displays.

The sound output unit may output audio data received from the communication interface 330 or stored in the memory 350. Also, the sound output unit may output an audio signal related to a function performed by the cooking appliance 300. The sound output unit may include a speaker, a buzzer, or the like.

The input interface is for receiving an input from a user. The input interface may include at least one of a key pad, a dome switch, a touch pad (contact capacitance type, pressure resistive type, an infrared detection type, surface ultrasonic wave conduction type, integral tension measuring type, piezo-effect type, or the like), a jog wheel, and a jog switch, but is not limited thereto.

The input interface may include a speech recognition module. For example, the wireless power transmission apparatus 200 may receive a speech signal that is an analog signal through a microphone, and convert a speech portion into computer-readable text using an automatic speech recognition (ASR) model.

The memory 350 may store a program for processes and controls by the processor 340, or may store pieces of input/output data (e.g., a plurality of power transmission patterns and cooking progress information of the cooking appliance 300). The memory 350 may store an Al model.

The memory 350 may include at least one type of storage medium among a flash memory type, a hard disk type, a multimedia card micro type, a card type memory (for example, a secure digital (SD) or an extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk. Also, the wireless power transmission apparatus 200 may operate a web storage or cloud server performing a storing function on the Internet.

The load 370 may include a heater and a motor. The heater may generate heat by receiving power through the Rx coil 322 and supply heat to food in the container 380 of the cooking appliance 300. The motor may operate by receiving power through the Rx coil 322 to supply electric power required to cook food in the container 380 of the cooking appliance 300 (e.g., a blender rotates blades to grind food).

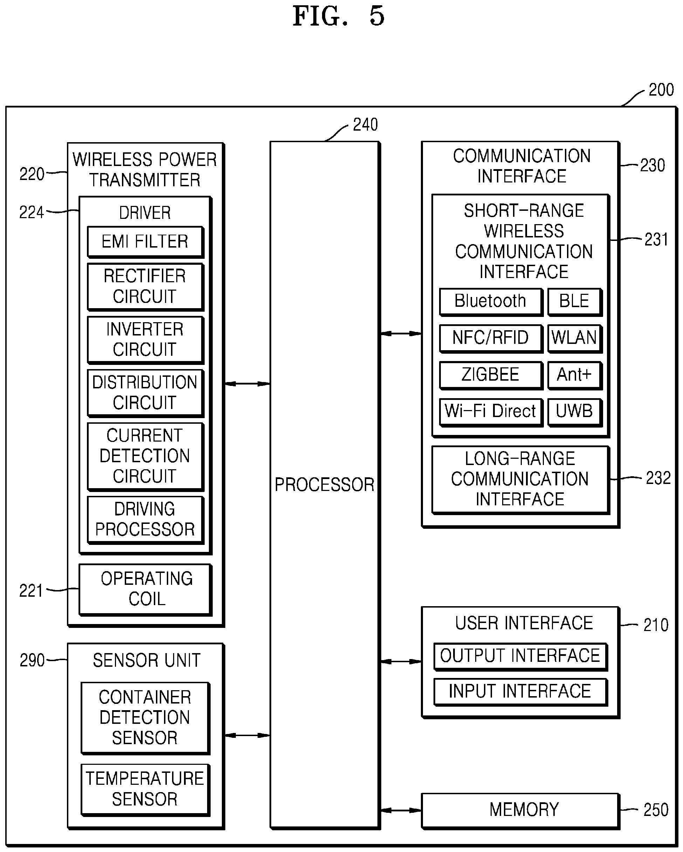

FIG. 5 is a block diagram illustrating an example configuration of a wireless power transmission apparatus, according to an embodiment of the present disclosure. FIG. 5 illustrates a configuration of the second wireless power transmission apparatus 200, and the first wireless power transmission apparatus 100 may have the same or similar configuration.

Referring to FIG. 5, the wireless power transmission apparatus 200 according to an embodiment may include the user interface 210, a wireless power transmitter 220, the communication interface 230, the processor 240, the memory 250, and a sensor unit 290.

The wireless power transmitter 220 may include a driver 224 and the operating coil 221, but is not limited thereto. The driver 224 may receive power from an external source and supply a current to the operating coil 221 according to a driving control signal of the processor 240. The driver 224 may include an electro-magnetic interface (EMI) filter, a rectifier circuit, an inverter circuit, a distribution circuit, a current detection circuit, and a driving processor, but is not limited thereto.

The EMI filter may block high frequency noise included in an alternating current supplied from the external source and transmit the alternating current and an alternating voltage of pre-determined frequency (e.g., 50 Hz or 60 Hz). A fuse and a relay may be provided between the EMI filter and the external source to block an overcurrent. Alternating power in which the high frequency noise is blocked by the EMI filter is supplied to the rectifier circuit.

The rectifier circuit may convert alternating power to direct power. For example, the rectifier circuit may convert an alternating voltage in which a size and polarity (a positive voltage or a negative voltage) change with time to a direct voltage in which a size and polarity are constant, and convert an alternating current in which a size and a direction (a positive current or a negative current) change with time to a direct current in which a size is constant. The rectifier circuit may include a bridge diode. For example, the rectifier circuit may include four diodes. The bridge diode may convert an alternating voltage in which polarity changes with time to a positive voltage in which polarity is constant, and convert an alternating current in which a direction changes with time to a positive current in which a direction is constant. The rectifier circuit may include a DC link capacitor. The DC link capacitor may convert a positive voltage of which size changes with time to a DC voltage having a constant size.

The inverter circuit may include a switching circuit configured to supply or block a driving current to the operating coil 221, and a resonant circuit configured to generate resonance together with the operating coil 221. The switching circuit may include a first switch and a second switch. The first switch and the second switch may be connected in series to each other between a plus line and a minus line output from the rectifier circuit. The first switch and the second switch may be turned on or off according to the driving control signal of the driving processor.

The inverter circuit may control a current supplied to the operating coil 221. For example, a size and direction of a current flowing through the operating coil 221 may change according to on/off of the first switch and the second switch included in the inverter circuit. In this case, an alternating current may be supplied to the operating coil 221. The alternating current in sine waves is supplied to the operating coil 221 according to switching operations of the first switch and second switch. Also, a current supplied to the operating coil 221 may be increased and strength of a magnetic field (an output of the wireless power transmission apparatus 200) output by the operating coil 221 may be increased when switching cycles of the first switch and second switch are increased (e.g., when switching frequencies of the first switch and second switch are decreased).

When the wireless power transmission apparatus 200 includes a plurality of the operating coils 221, the driver 224 may include the distribution circuit. The distribution circuit may include a plurality of switches configured to transmit or block a current supplied to the plurality of operating coils 221, and the plurality of switches may be turned on or off according to a distribution control signal of the driving processor.

The current detection circuit may include a current sensor configured to measure a current output from the inverter circuit. The current sensor may transmit an electrical signal corresponding to a measured current value to the driving processor.

The driving processor may determine a switching frequency (turn-on/turn-off frequency) of the switching circuit included in the inverter circuit, based on output strength (power level) of the wireless power transmission apparatus 200. The driving processor may generate the driving control signal for turning on/off the switching circuit according to the determined switching frequency.

The operating coil 221 may generate a magnetic field for heating the cooking appliance 300. For example, when the driving current is supplied to the operating coil 221, the magnetic field may be induced around the operating coil 221. When a current, e.g., the alternating current, in which a size and direction change with time, is supplied to the operating coil 221, a magnetic field in which a size and direction change with time may be induced around the operating coil 221. The magnetic field around the operating coil 221 may pass through a top plate including tempered glass and reach the cooking appliance 300 placed on the top plate. An eddy current rotating based on the magnetic field may be generated in the cooking appliance 300 due to the magnetic field in which the size and direction change with time, and electric resistance heat may be generated in the cooking appliance 300 due to the eddy current. The electric resistance heat is heat generated in a resistor when a current flows through the resistor, and may also be referred to as Joule heat. The cooking appliance 300 is heated by the electric resistance heat and content inside the cooking appliance 300 may be heated.

When the cooking appliance 300 includes the Rx coil 322 as shown in FIG. 3B or 3C, the magnetic field around the operating coil 221 may be induced in the Rx coil 322.

The processor 240 controls general operations of the wireless power transmission apparatus 200. The processor 240 may execute programs stored in the memory 250 to control the wireless power transmitter 220, the communication interface 230, the sensor unit 290, the user interface 210, and the memory 250.

According to an embodiment of the present disclosure, the wireless power transmission apparatus 200 may include an Al processor. The Al processor may be manufactured in the form of an Al dedicated hardware chip or manufactured as a part of an existing general-purpose processor (e.g., a central processing unit (CPU) or an application processor) or a graphic-dedicated processor (e.g., a graphics processing unit (GPU)) to be mounted on the wireless power transmission apparatus 200.

According to an embodiment of the present disclosure, the processor 240 may control the inverter circuit to supply, to the cooking appliance 300, power of a pre-set level so as to operate the communication interface 330 of the cooking appliance 300, and when the communication interface 330 of the cooking appliance 300 is operated, receive a first wireless communication signal transmitted from the communication interface 330 of the cooking appliance 300. The first wireless communication signal may include ID information (e.g., MAC address) of the cooking appliance 300.

According to an embodiment of the present disclosure, the processor 240 may identify the cooking appliance 300 as a general IH container when the first wireless communication signal is not received from the cooking appliance 300 within a certain period of time after detecting that the cooking appliance 300 is located on a top plate of the wireless power transmission apparatus 200. When the first wireless communication signal transmitted from the communication interface 330 of the cooking appliance 300 is detected, the processor 240 may identify the cooking appliance 300 as a communicable type small appliance.

In embodiments of the present disclosure, operations described to be performed by the wireless power transmission apparatus 200 may be substantially performed by the processor 240.

The communication interface 230 may include one or more components enabling communication between the wireless power transmission apparatus 200 and the cooking appliance 300 or between the wireless power transmission apparatus 200 and the server 10. For example, the communication interface 230 may include a short-range wireless communication interface 231 and a long-range communication interface 232.

The short-range wireless communication interface may include a Bluetooth communication interface, a BLE communication interface, an NFC interface, a wireless local area network (WLAN) (Wi-Fi) communication interface, a Zigbee communication interface, an infrared data association (IrDA) communication interface, a Wi-Fi direct (WFD) communication interface, a UWB communication interface, or an Ant+ communication interface, but is not limited thereto.

The long-range communication interface 232 may be used to communicate with a server device when the cooking appliance is controlled by the server 10 remotely in an IoT environment. The long-range communication interface 232 may include the Internet, a computer network (e.g., a LAN or a WAN), and a mobile communication interface. The mobile communication interface may transmit or receive a wireless signal to or from at least one of a base station, an external terminal, or a server, on a mobile communication network. Here, the wireless signal may include various types of data according to exchange of a voice call signal, an image call signal, or a text/multimedia message. The mobile communication interface may include a 3G module, a 4G module, an LTE module, a 5G module, a 6G module, an NB-loT module, or an LTE-M module, but is not limited thereto.

The sensor unit 290 may include a container detection sensor and a temperature sensor, but is not limited thereto.

The container detection sensor may be a sensor configured to detect the cooking appliance 300 being placed on the top plate. For example, the container detection sensor may be implemented as a current sensor, but is not limited thereto. The container detection sensor may be implemented as at least one of a proximity sensor, a touch sensor, a weight sensor, a temperature sensor, an illumination sensor, and a magnetic sensor.

The temperature sensor may detect a temperature of the cooking appliance 300 placed on the top plate or a temperature of the top plate. The cooking appliance 300 is inductively heated by the operating coil 221 and may be over-heated according to a material. Accordingly, the wireless power transmission apparatus 200 may detect the temperature of the cooking appliance 300 placed on the top plate or the temperature of the top plate and block operations of the operating coil 221 when the cooking appliance 300 is over-heated. The temperature sensor may be provided near the operating coil 221. For example, the temperature sensor may be located at the center of the operating coil 221.

According to an embodiment of the present disclosure, the temperature sensor may include a thermistor in which an electric resistance value changes according to a temperature. For example, the temperature sensor may be an NTC temperature sensor, but is not limited thereto. The temperature sensor may be a PTC temperature sensor.

The user interface 210 may include an output interface and an input interface. The output interface is for outputting an audio signal or a video signal and may include a display and a sound output unit.

When the display is configured as a touch screen by forming a layer structure with a touch pad, the display may be used as an input interface as well as an output interface. The display may include at least one of a liquid crystal display, a thin-film transistor-liquid crystal display, an LED, an organic light-emitting diode, a flexible display, a 3D display, and an electrophoretic display. Also, according to an embodiment of the wireless power transmission apparatus 200, the wireless power transmission apparatus 200 may include two or more displays.

The sound output unit may output audio data received from the communication interface 230 or stored in the memory 250. Also, the sound output unit may output an audio signal related to a function performed by the wireless power transmission apparatus 200. The sound output unit may include a speaker, a buzzer, or the like.

According to an embodiment of the present disclosure, the output interface may display information about the cooking appliance 300. For example, the output interface may output a graphical user interface (GUI) corresponding to ID information or product type information of the cooking appliance 300. Also, the output interface may output information about a current location of the cooking appliance 300.

The input interface is for receiving an input from a user. The input interface may include at least one of a key pad, a dome switch, a touch pad (contact capacitance type, pressure resistive type, an infrared detection type, surface ultrasonic wave conduction type, integral tension measuring type, piezo-effect type, or the like), a jog wheel, and a jog switch, but is not limited thereto.

The input interface may include a speech recognition module. For example, the wireless power transmission apparatus 200 may receive a speech signal that is an analog signal through a microphone, and convert a speech portion into computer-readable text using an ASR model.

The memory 250 may store a program for processes and controls by the processor 240, or may store pieces of input/output data (e.g., a plurality of power transmission patterns and cooking progress information of the cooking appliance 300). The memory 250 may store an Al model.

The memory 250 may include at least one type of storage medium among a flash memory type, a hard disk type, a multimedia card micro type, a card type memory (for example, an SD or XD memory), RAM, SRAM, ROM, EEPROM, PROM, a magnetic memory, a magnetic disk, and an optical disk. Also, the wireless power transmission apparatus 200 may operate a web storage or cloud server performing a storing function on the Internet.

Although not separately illustrated, the server 10 of FIG. 2 may include a communication interface, a processor, and a memory to perform operations required for linked control of the first and second wireless power transmission apparatuses 100 and 200 through communication with the first and second wireless power transmission apparatuses 100 and 200 and the cooking appliance 300. According to an embodiment, the server 10 may be an IoT server configured to integrally control home loT devices, and in this case, the server 10 may provide, to the user, information related to control of the loT devices through a mobile terminal and receive, from the user, a command for controlling the loT devices through the mobile terminal. In other words, the user may identify information related to control of the first and second wireless power transmission apparatuses 100 and 200 and the cooking appliance 300 through the mobile terminal and input a command for control.

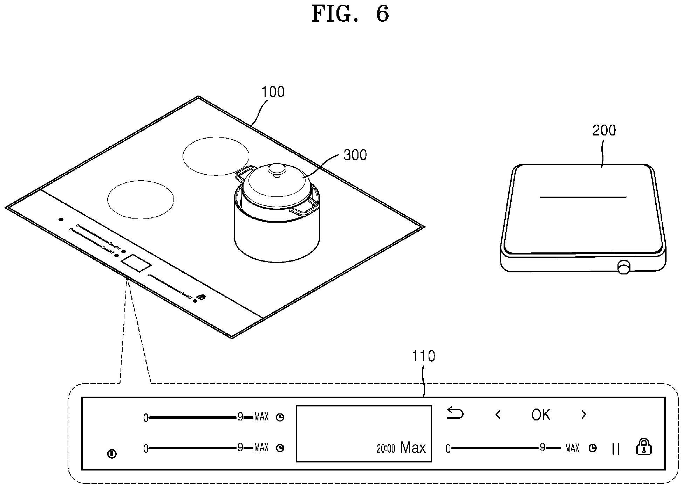

FIGS. 6, 7A, 7B, 8A, 8B, 8C, 8D and 9 are diagrams illustrating example processes of continuously performing, when a cooking appliance is moved from a first wireless power transmission apparatus to a second wireless power transmission apparatus, cooking previously performed by the first wireless power transmission apparatus, according to embodiments of the present disclosure. Embodiments will be described in an order in which operations are performed, with reference to the drawings. Some of FIGS. 6, 7A, 7B, 8A, 8B, 8C, 8D and 9 (which may be referred to as FIGS. 6 to 9) do not illustrate the server 10 but it is assumed that the server 10 may be involved in embodiments of all drawings.

FIG. 6 illustrates a situation in which cooking food is started while the cooking appliance 300 is placed on the first wireless power transmission apparatus 100. Referring to FIG. 6, while the cooking appliance 300 is placed on any one (a third burner) of three burners of the first wireless power transmission apparatus 100, a user may input an operation command (a command for a cooking operation) for the third burner where the cooking appliance 300 is located, through a user interface 110.

In embodiments described with reference to FIGS. 6 to 24, it is assumed that recipe information is set as in Table 1 below.

**[Table 1]**

| **Attribute** | **Value** |
|---|---|
| Stage Number | 1 |
| Total Number of Stages | 2 |
| Burner Power Level | 1600 W |
| Target Temperature | 95° |
| Cooking Time | - |
| Stage Stop Condition | Temperature |
| | |
| Stage Number | 2 |
| Total Number of Stages | 2 |
| Burner Power Level | 1600 W |
| Target Temperature | - |
| Cooking Time | 20 minutes |
| Stage Stop Condition | Time |

Based on the recipe information of Table 1 above, it is determined that the cooking appliance 300 needs to be heated at a fire power level of 1600 W until a temperature measured by the temperature sensor included in the cooking appliance 300 reaches a target temperature (95°) in a first stage, and after the measured temperature reaches the target temperature (95°), a second stage is entered to heat the cooking appliance 300 for 20 minutes at a fire power level of 1600 W.

In the embodiment illustrated in FIG. 6, the fire power level (burner power level) is set to "Max" and a cooking time is set to "20 minutes". As described above, the maximum output of the first wireless power transmission apparatus 100 is 1600 W, and thus, such settings may correspond to the second stage (heating for 20 minutes at 1600 W is required) of the recipe information of Table 1. According to an embodiment, the user may directly set the fire power level and the cooking time through the user interface 110 of the first wireless power transmission apparatus 100. Also, according to an embodiment, the recipe information may be set as the user inputs or selects a name of a menu (e.g., braised short ribs) to be cooked. For example, when the user inputs or selects a name of a menu through the user interface 110 of the first wireless power transmission apparatus 100, the first wireless power transmission apparatus 100 may access a database (DB) of an embedded memory to extract a fire power level and cooking time corresponding to the menu and set recipe information accordingly. Also, according to an embodiment, the first wireless power transmission apparatus 100 may access a DB of an embedded memory of the cooking appliance 300 or server 10 to extract the fire power level and cooking time corresponding to the menu and set the recipe information accordingly. Also, according to an embodiment, the first wireless power transmission apparatus 100 may transmit the name of the menu to the cooking appliance 300, and the cooking appliance 300 may extract the recipe information corresponding to the menu from a DB stored in the memory 350 and transmit the recipe information to the first wireless power transmission apparatus 100.

When the recipe information is set as in the situation illustrated in FIG. 6, cooking may be started as the first wireless power transmission apparatus 100 transmits power to the cooking appliance 300 according to the set recipe information. As described above, food in the container 380 of the cooking appliance 300 may be cooked when the container 380 formed of an IH metal material, which is included in the cooking appliance 300, is inductively heated by power or when the load 370 included in the cooking appliance 300 is heated by power and transfers heat to the container 380.

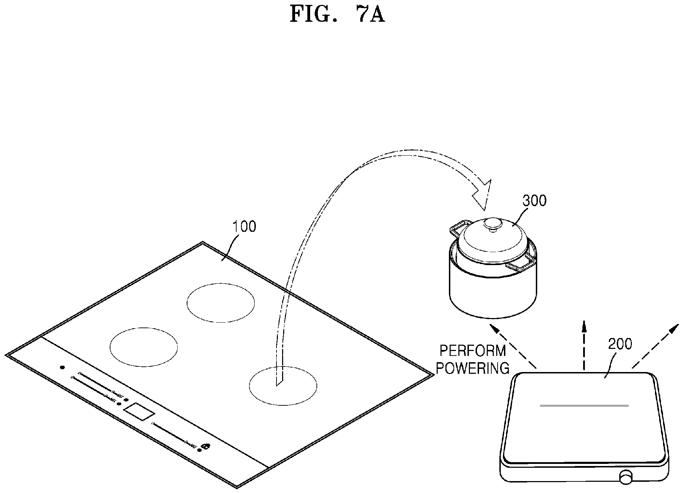

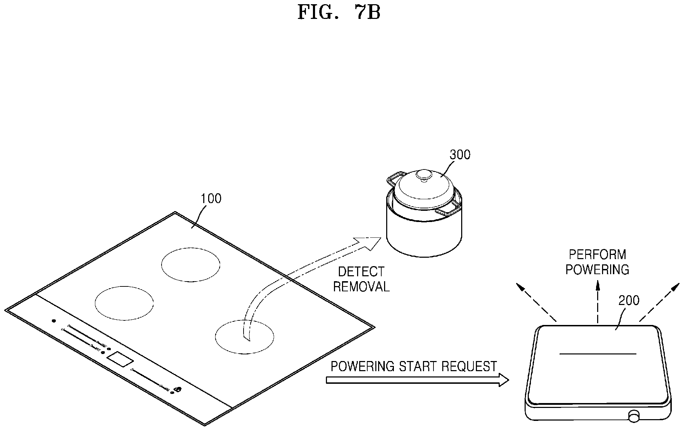

When the cooking appliance 300 is moved to the second wireless power transmission apparatus 200 while the food is being cooked by the cooking appliance 300 by receiving power from the first wireless power transmission apparatus 100, the second wireless power transmission apparatus 200 may detect the cooking appliance 300. FIGS. 7A and 7B illustrate embodiments regarding processes in which the second wireless power transmission apparatus 200 detects the cooking appliance 300.

Referring to FIG. 7A, the second wireless power transmission apparatus 200 may periodically or aperiodically perform powering. Here, "powering" may refer, for example, to an operation of outputting a small amount of power to detect an object, such as the cooking appliance 300. The second wireless power transmission apparatus 200 may perform the powering to identify whether an object, such as the cooking appliance 300, is located thereon.

The second wireless power transmission apparatus 200 may start the powering under various conditions. According to an embodiment, the second wireless power transmission apparatus 200 may perform the powering periodically or aperiodically from a time when power is turned on or perform the powering periodically or aperiodically from a time when power is turned on and a wireless power transmission mode is entered (e.g., an operating mode is activated by the user). According to an embodiment, the second wireless power transmission apparatus 200 may configured to perform the powering periodically or aperiodically even when power is turned off and be turned on automatically when the cooking appliance 300 is detected through the powering.

According to an embodiment, the second wireless power transmission apparatus 200 may start the powering according to a request of the first wireless power transmission apparatus 100, and such an embodiment is illustrated in FIG. 7B.

Referring to FIG. 7B, the first wireless power transmission apparatus 100 may detect removal of the cooking appliance 300 during cooking and transmit a powering start request to the second wireless power transmission apparatus 200. In this regard, the first wireless power transmission apparatus 100 and the second wireless power transmission apparatus 200 may be paired up in advance such that wireless communication is possible. According to an embodiment, the first wireless power transmission apparatus 100 may transmit the powering start request to the second wireless power transmission apparatus 200 through the server 10.

The second wireless power transmission apparatus 200 may perform the powering periodically or aperiodically from a time when the request is received from the first wireless power transmission apparatus 100.

FIG. 7B illustrates a case where there are two wireless power transmission apparatuses 100 and 200, but when there are three or more wireless power transmission apparatuses, it is unclear to which wireless power transmission apparatus the cooking appliance 300 has been moved, and thus, the first wireless power transmission apparatus 100 may transmit the powering start request to all remaining wireless power transmission apparatuses.

In the embodiments illustrated in FIGS. 7A and 7B, it has been described that the second wireless power transmission apparatus 200 performs the powering before and after a time when the cooking appliance 300 is removed from the first wireless power transmission apparatus 100, but according to an embodiment, the first wireless power transmission apparatus 100 may also perform the powering periodically or aperiodically when the removal of the cooking appliance 300 is detected.

This is because, the embodiments of the present disclosure have been described based on an assumption that the cooking appliance 300 is moved to the second wireless power transmission apparatus 200 while performing cooking on the first wireless power transmission apparatus 100, but alternatively, the cooking appliance 300 may be removed from the first wireless power transmission apparatus 100 during cooking and then placed on the first wireless power transmission apparatus 100 again to perform remaining cooking. In this case, the first wireless power transmission apparatus 100 may detect the cooking appliance 300 through the powering and transmit power to the cooking appliance 300 for the remaining cooking, and operations (operations for the remaining cooking) described to be performed by the second wireless power transmission apparatus 200 in embodiments of the present disclosure may be performed by the first wireless power transmission apparatus 100.

As shown in FIGS. 7A and 7B, when the cooking appliance 300 approaches the second wireless power transmission apparatus 200 while the second wireless power transmission apparatus 200 is performing the powering, the pickup coil 321 of the cooking appliance 300 may receive power according to the powering. When the communication interface 330 is activated as power is supplied to the communication interface 330 of the cooking appliance 300 by the received power, a wireless communication (e.g., BLE communication) connection may be established with the communication interface 230 of the second wireless power transmission apparatus 200.

When the second wireless power transmission apparatus 200 detects the cooking appliance 300, the second wireless power transmission apparatus 200 may obtain operation history information corresponding to the cooking appliance 300 and perform the remaining cooking by transmitting power to the cooking appliance 300 based on the obtained operation history information.

When there is no operation history information corresponding to the cooking appliance 300, the second wireless power transmission apparatus 200 may receive, from the user, an input for setting new recipe information. According to an embodiment, the second wireless power transmission apparatus 200 may receive the input for setting the new recipe information in a similar manner as the user inputs an operation command through the user interface 110 of the first wireless power transmission apparatus 100 described above with reference to FIG. 6. In other words, the user may directly input a fire power level and cooking time through the user interface 210 of the second wireless power transmission apparatus 200, and may input or select a name of a menu to be cooked.

Cases where there is no operation history information corresponding to the cooking appliance 300 may, for example, and without limitation, be as follows.
(1) A case where there is no menu being cooked previously in the cooking appliance 300
(2) A case where the cooking appliance 300 was previously cooking a menu but a certain period of time has passed after cooking was stopped, and thus, operation history information was deleted
(3) A case where the cooking appliance 300 was previously cooking a menu but operation history information is lost due to a communication disconnection or the like

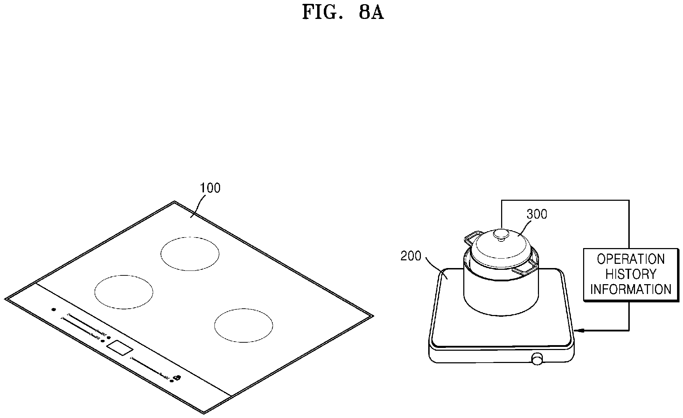

When there is operation history information corresponding to the cooking appliance 300, the second wireless power transmission apparatus 200 may obtain the operation history information through various paths, and FIGS. 8A to 8D illustrate various embodiments in which the second wireless power transmission apparatus 200 obtains the operation history information.

Referring to FIG. 8A, the second wireless power transmission apparatus 200 may receive the operation history information from the cooking appliance 300. As described above, the cooking appliance 300 may include the memory 350 and the operation history information may be stored in the memory 350. According to an embodiment, the cooking appliance 300 may periodically receive, from the first wireless power transmission apparatus 100, the operation history information while performing cooking on the first wireless power transmission apparatus 100, and store the operation history information in the memory 350. Alternatively, according to an embodiment, the cooking appliance 300 may control power transmission of the first wireless power transmission apparatus 100 according to the recipe information (e.g., when the cooking appliance 300 transmits a command to the first wireless power transmission apparatus 100, the first wireless power transmission apparatus 100 transmits power to the cooking appliance 300 according to the command), and in this case, the processor 340 of the cooking appliance 300 may directly store the operation history information in the memory 350.

According to an embodiment, when a wireless communication connection is established between the cooking appliance 300 and the second wireless power transmission apparatus 200 as the communication interface 330 of the cooking appliance 300 is activated by power transmitted by the second wireless power transmission apparatus 200 through the powering, the cooking appliance 300 may transmit the operation history information stored in the memory 350 to the second wireless power transmission apparatus 200.

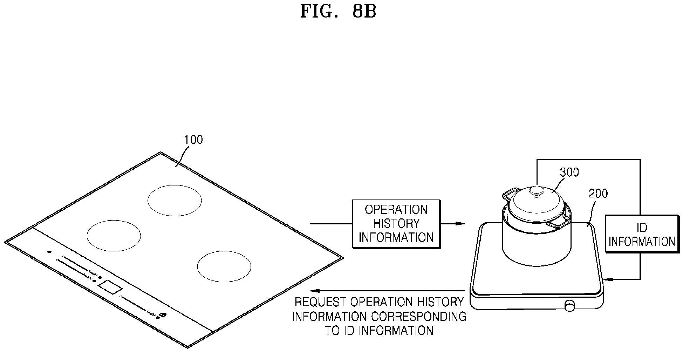

Referring to FIG. 8B, the second wireless power transmission apparatus 200 may obtain ID information (e.g., a model number, a serial number, a name set by the user, or the like) of the cooking appliance 300 from the cooking appliance 300, and obtain the operation history information corresponding to the cooking appliance 300 using the ID information. According to an embodiment, the second wireless power transmission apparatus 200 may request the operation history information corresponding to the ID information while transmitting the ID information of the cooking appliance 300 to the first wireless power transmission apparatus 100.

The first wireless power transmission apparatus 100 may periodically or continuously match the operation history information with the ID information of the cooking appliance 300 and store the same in the embedded memory while performing cooking by transmitting power to the cooking appliance 300. The first wireless power transmission apparatus 100 may store the operation history information even when the cooking appliance 300 is removed, and transmit the operation history information corresponding to the ID information to the second wireless power transmission apparatus 200 when the ID information is received form the second wireless power transmission apparatus 200.

The cooking appliance 300 may use BLE communication or NFC when transmitting the ID information to the second wireless power transmission apparatus 200.

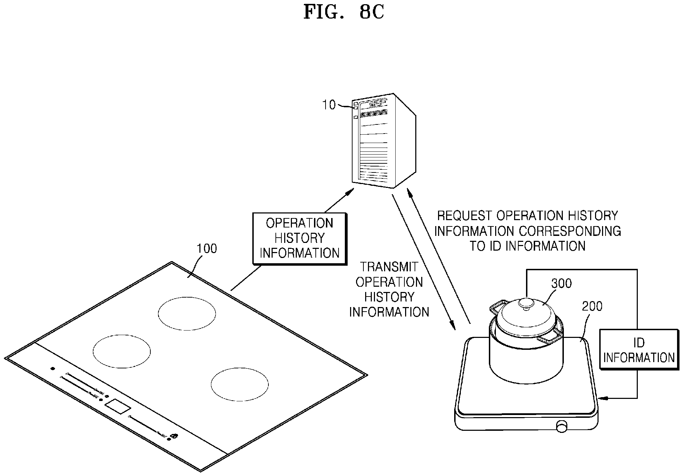

Referring to FIG. 8C, the second wireless power transmission apparatus 200 may receive, from the server 10, the operation history information corresponding to the cooking appliance 300. When the ID information of the cooking appliance 300 is received from the cooking appliance 300 through BLE communication or NFC, the second wireless power transmission apparatus 200 may transmit the ID information to the server 10 while requesting the operation history information corresponding to the ID information.

According to an embodiment, upon receiving the ID information from the second wireless power transmission apparatus 200, the server 10 may request peripheral apparatuses including the first wireless power transmission apparatus 100 for the operation history information corresponding to the ID information and receive the operation history information from the first wireless power transmission apparatus 100. Also, according to an embodiment, the operation history information and the ID information corresponding to the cooking appliance 300 may be previously matched and stored in the server 10. For example, while performing cooking by transmitting power to the cooking appliance 300, the first wireless power transmission apparatus 100 may transmit the ID information and operation history information of the cooking appliance 300 to the server 10 and request the server 10 to store the same.

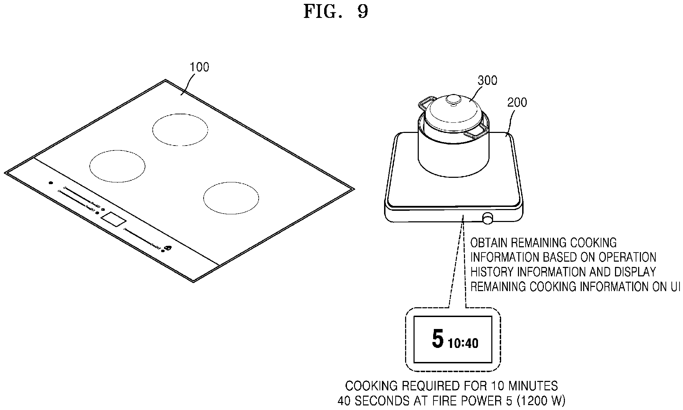

According to an embodiment, the second wireless power transmission apparatus 200 may also transmit device information (e.g., maximum output ) of the second wireless power transmission apparatus 200 when transmitting the operation history information to the server 10. The server 10 may revise the operation history information based on the device information of the second wireless power transmission apparatus 200 and then transmit the same to the second wireless power transmission apparatus 200. A method of revising the operation history information will be described in detail below with reference to FIG. 9.

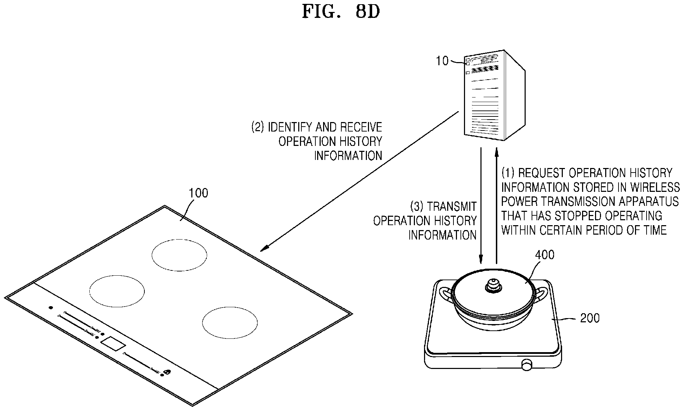

FIG. 8D illustrates a process in which the second wireless power transmission apparatus 200 receives operation history information corresponding to an IH container 400 when cooking is performed through the IH container 400 instead of the cooking appliance 300 that is a small appliance. It is assumed that the IH container 400 is moved to the second wireless power transmission apparatus 200 while performing cooking by receiving power from the first wireless power transmission apparatus 100.

When the second wireless power transmission apparatus 200 detects the IH container 400 through powering, the second wireless power transmission apparatus 200 requests the server 10 for operation history information stored in a wireless power transmission apparatus that has stopped operating within a certain period of time.

The IH container 400 is unable to perform communication with the second wireless power transmission apparatus 200, and thus, the second wireless power transmission apparatus 200 is unable to obtain ID information of the IH container 400. When the first wireless power transmission apparatus 100 was cooking food using the IH container 400 before the IH container 400 is detected by the second wireless power transmission apparatus 200, the operation history information corresponding to the IH container 400 may be stored in the first wireless power transmission apparatus 100. Accordingly, the server 10 may identify whether there is a wireless power transmission apparatus that has stopped operating within a certain period of time (e.g., during a period of time from two minutes before a time when the IH container 400 is detected by the second wireless power transmission apparatus 200 to a time of the detection) from among peripheral wireless power transmission apparatuses. When it is identified that the first wireless power transmission apparatus 100 has stopped operating within the certain period of time, the server 10 may receive the operation history information from the first wireless power transmission apparatus 100 and transmit the received operation history information to the second wireless power transmission apparatus 200.

Upon obtaining the operation history information corresponding to the cooking appliance 300, the second wireless power transmission apparatus 200 may perform a remaining cooking operation by transmitting power to the cooking appliance 300 based on the operation history information.

Referring to FIG. 9, the second wireless power transmission apparatus 200 may obtain remaining cooking information based on the operation history information and display the remaining cooking information on the user interface 210. Hereinafter, how the remaining cooking information is obtained based on the operation history information and how the operation history information or remaining cooking information is revised will be described in detail.

As described above, the recipe information may be set as Table 1 above. It is assumed that the cooking appliance 300 is heated for 12 minutes at 1600 W while being placed on the first wireless power transmission apparatus 100 and then moved to the second wireless power transmission apparatus 200. In this case, cooking appliance status information is as Table 2 below.

**[Table 2]**

| **Attribute** | **Value** |
|---|---|
| Burner Number | 3 |
| Burner Operating Status | Paused |
| Burner Power Level | 1600 W |
| Cooking Time | 12 minutes |
| Remaining Cooking Time | 8 minutes |
| Timer Operating Status | Paused |

Based on the cooking appliance status information of Table 2, it is determined that the cooking appliance 300 has been heated for 12 minutes at a fire power level of 1600 W in a third burner of the first wireless power transmission apparatus 100 and requires to be heated for 8 more minutes for cooking completion, and currently, power transmission operation of the third burner and an operation of a timer are temporarily stopped. In other words, cooking status information and remaining cooking information that may be verified from the cooking appliance status information above are as follows.

### <Cooking Status Information>

Heated for 12 minutes at 1600 W

### <Remaining Cooking Information>

Requires to be heated for 8 minutes at 1600 W

When the second wireless power transmission apparatus 200 supports output of 1600 W, a cooking operation may be performed continuously according to the remaining cooking information, but as assumed above, maximum output of the second wireless power transmission apparatus 200 is 1200 W, and thus, the operation history information or the remaining cooking information needs to be revised.

According to an embodiment, when the server 10 or the cooking appliance 300 revises the operation history information based on the device information of the second wireless power transmission apparatus 200, and transmits the same to the second wireless power transmission apparatus 200, the second wireless power transmission apparatus 200 may obtain the remaining cooking information based on the revised operation history information. The server 10 or the cooking appliance 300 may correct the operation history information as follows, based on the maximum output of the second wireless power transmission apparatus 200 being 1200 W. In this regard, the second wireless power transmission apparatus 200 may transmit the device information to the server 10 or the cooking appliance 300.

A method of revising the operation history information (the recipe information and the cooking appliance status information) when the device information of the second wireless power transmission apparatus 200 is as Table 3 below will be described with reference to FIGS. 39 and 40.

**[Table 3]**

| **Attribute** | **Value** |
|---|---|
| Model ID | SP002 |
| Number of Burners | 1 |
| Burner Number | 1 |
| Maximum Power Level | 1200 W |

Based on the device information of Table 3 above, it is determined that a model ID of the second wireless power transmission apparatus 200 is "SP002", and the second wireless power transmission apparatus 200 includes one burner (a first burner) and has a maximum power level (a maximum fire power level) is 1200 W.

FIG. 39 is a table illustrating an example process in which recipe information 3910 is revised based on device information 3930 of the second wireless power transmission apparatus 200 according to various embodiments.

Referring to FIG. 39, the first recipe information 3910 is recipe information initially set when an operation of the cooking appliance 300 starts on the first wireless power transmission apparatus 100, and second recipe information 3920 is recipe information revised based on the device information 3930 of the second wireless power transmission apparatus 200 after the cooking appliance 300 is moved to the second wireless power transmission apparatus 200.

According to the first recipe information 3910, a fire power level (burner power level) required in all stages is 1600 W, but as identified from the device information 3930, the fire power level (maximum power level) supportable by the second wireless power transmission apparatus 200 is 1200 W, and thus, the first recipe information 3910 needs to be revised accordingly. Thus, a burner power level 3911 in a second stage of the first recipe information 3910 is 1600 W, but a burner power level 3921 in the second stage of the second recipe information 3920 is revised to 1200 W. In addition, accordingly, a cooking time 3912 in the second stage of the first recipe information 3910 is 20 minutes, but a cooking time 3922 in the second stage of the second recipe information 3920 is revised to 26 minutes 40 seconds. In a first stage, a stage stop condition is "temperature", and thus, only a burner power level is revised from 1600 W to 1200 W.

FIG. 40 is a table illustrating an example process in which cooking appliance status information 4010 is revised based on device information 4030 of the second wireless power transmission apparatus 200 according to various embodiments.

Referring to FIG. 40, the first cooking appliance status information 4010 is cooking appliance status information stored last when the cooking appliance 300 is removed from the first wireless power transmission apparatus 100, and second cooking appliance status information 4020 is cooking appliance status information revised based on the device information 4030 of the second wireless power transmission apparatus 200 when the cooking appliance 300 is moved to the second wireless power transmission apparatus 200.

According to the first cooking appliance status information 4010, the fire power level (burner power level) is 1600 W, but as identified from the device information 4030, the fire power level (maximum power level) supportable by the second wireless power transmission apparatus 200 is 1200 W, and thus, the first cooking appliance status information 4010 needs to be revised accordingly. Thus, a burner power level 4011 of the first cooking appliance status information 4010 is 1600 W, but a burner power level 4021 of the second cooking appliance status information 4020 is revised to 1200 W. Also, a cooking time 4012 and a remaining cooking time 4013 of the first cooking appliance status information 4010 are respectively 12 minutes and 8 minutes, but a cooking time 4022 and a remaining cooking time 4023 of the second cooking appliance status information 4020 are revised respectively to 16 minutes and 10 minutes 40 seconds. Accordingly, the revised cooking status information obtained from the second cooking appliance status information 4020 may be as follows.

### <Revised Cooking Status Information>

Heated for 16 minutes at 1200 W
When the operation history information revised as such is received from the server 10 or the cooking appliance 300, the second wireless power transmission apparatus 200 may obtain remaining cooking information as follows. The server 10 or the cooking appliance 300 may obtain the remaining cooking information as follows from the second cooking appliance status information 4020.

### <Remaining Cooking Information obtained based on Revised Operation History Information>

Needs to be heated for 10 minutes 40 seconds at 1200 W
According to an embodiment, the second wireless power transmission apparatus 200 may obtain the remaining cooking information from the operation history information that is not revised, and revise the remaining cooking information based on its own device information. A result of obtaining the remaining cooking information based on the revised operation history information and a result of revising the remaining cooking information obtained based on the operation history information that is not revised are the same.

According to an embodiment, when revising the operation history information, not only device information of a wireless power transmission apparatus, but also information (e.g., a temperature) sensed by the cooking appliance 300 may be used. According to an embodiment, a temperature when the cooking appliance 300 is removed from the first wireless power transmission apparatus 100 (hereinafter, a first time) and a temperature when the cooking appliance 300 is moved to the second wireless power transmission apparatus 200 (e.g., when BLE communication is established) (hereinafter, a second time) may be measured and applied when revising the operation history information.

A process of revising the operation history information even in consideration of sensing information of the cooking appliance 300 will be described in greater detail with reference to FIGS. 39 and 40.

It is assumed that a temperature (e.g., a temperature of food in the cooking appliance 300) measured by a temperature sensor included in the cooking appliance 300 while a second stage is entered from among all stages included in the recipe information at the first time is 95°, and a temperature measured by the temperature sensor included in the cooking appliance 300 at the second time is 80°. A difference between the two measured temperatures is increased when a time difference between the first time and the second time is increased.

As described above with reference to FIGS. 39 and 40, when the operation history information is revised only in consideration of the device information (maximum output is 1200 W) of the second wireless power transmission apparatus 200, the remaining cooking information indicating "needs to be heated for 10 minutes 40 seconds at 1200 W' is obtained, but when the sensing information (the temperatures at the first time and the second time) of the cooking appliance 300 are also considered, the remaining cooking information may be changed to "needs to be heated for 12 minutes 40 seconds at 1200 W' (2 minutes are added to a heating time as a temperature is decreased).

Upon obtaining the remaining cooking information, the second wireless power transmission apparatus 200 may display the remaining cooking information on the user interface 210 for the user to identify the remaining cooking information. In the embodiment of FIG. 9, the remaining cooking information indicating that the second wireless power transmission apparatus 200 needs to be heated for 10 minutes 40 seconds at a fire power level 5 (1200 W) is displayed on a display panel.

The user may identify the remaining cooking information displayed on the user interface 210 and apply a confirmation input to the second wireless power transmission apparatus 200 when the user wants to perform the remaining cooking accordingly, and thus, the second wireless power transmission apparatus 200 may perform a power transmission operation for the remaining cooking.

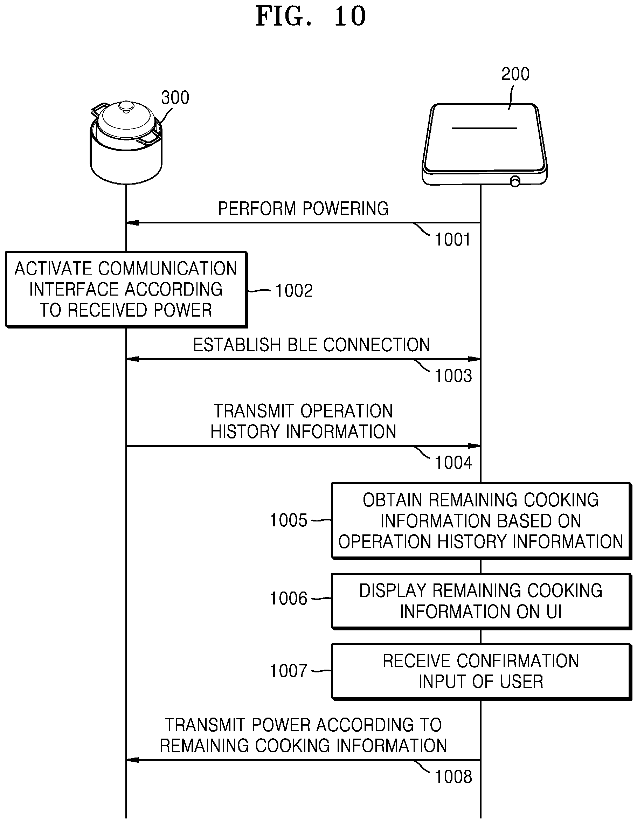

Hereinafter, operations performed by the server 10 and the first and second wireless power transmission apparatuses 100 and 200 and the cooking appliance 300, according to various embodiments, will be described with reference to flowcharts of FIGS. 10 to 24. The signal flow diagrams and flowcharts of FIGS. 10 to 24 may include results of variously combining the above-described operations in chronological order, and thus, the descriptions above may also be applied to the flowcharts of FIGS. 10 to 24.

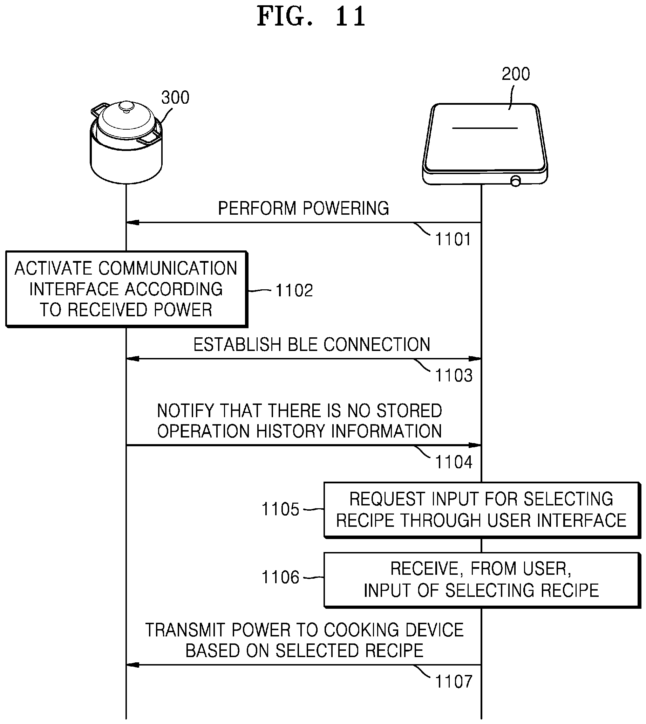

FIGS. 10 and 11 are signal flow diagrams illustrating example operations performed depending on whether operation history information is present after a cooking appliance is detected by a second wireless power transmission apparatus, according to an embodiment of the present disclosure.

Referring to FIG. 10, in operation 1001, the second wireless power transmission apparatus 200 may detect the cooking appliance 300 by performing powering. In operation 1002, a communication interface of the cooking appliance 300 may be activated according to power received by the powering. When the communication interface is activated, a BLE connection may be established between the cooking appliance 300 and the second wireless power transmission apparatus 200, in operation 1003.

When the BLE connection is established, the cooking appliance 300 may transmit the operation history information to the second wireless power transmission apparatus 200, in operation 1004. In this regard, the memory 350 of the cooking appliance 300 may store the operation history information at a time when the cooking operation previously performed by the cooking appliance 300 is stopped.

Upon receiving the operation history information, the second wireless power transmission apparatus 200 may obtain the remaining cooking information based on the operation history information, in operation 1005. In operation 1006, the second wireless power transmission apparatus 200 may display the remaining cooking information on a user interface. In FIG. 10, the remaining cooking information is displayed on the user interface of the second wireless power transmission apparatus 200, but according to an embodiment, the remaining cooking information may be displayed on a screen of a user terminal (e.g., a smartphone) directly connected to the second wireless power transmission apparatus 200 or connected to the server 10. In this regard, an application for controlling the first and second wireless power transmission apparatuses 100 and 200 and the cooking appliance 300 (e.g., an application for controlling a home loT device) may be installed on the user terminal and the remaining cooking information may be displayed through an execution screen of the application.

The user may identify information about a time taken to complete cooking, based on the remaining cooking information, and determine whether to continuously perform cooking. For example, the user may instruct to continuously perform the remaining cooking by inputting a confirmation input through the user interface of the second wireless power transmission apparatus 200. According to an embodiment, the user may apply a confirmation input for the remaining cooking information through the user terminal to instruct the second wireless power transmission apparatus 200 to continuously perform the remaining cooking.

Upon receiving the confirmation input from the user in operation 1007, the second wireless power transmission apparatus 200 may perform the remaining cooking by transmitting power to the cooking appliance 300 according to the remaining cooking information, in operation 1008.

Referring to FIG. 11, in operation 1101, the second wireless power transmission apparatus 200 may detect the cooking appliance 300 by performing powering. In operation 1102, the communication interface of the cooking appliance 300 may be activated according to power received by the powering. When the communication interface is activated, a BLE connection may be established between the cooking appliance 300 and the second wireless power transmission apparatus 200, in operation 1103.

After the BLE connection is established, the cooking appliance 300 may notify that there is no stored operation history information to the second wireless power transmission apparatus 200. According to an embodiment, when the BLE connection is established, the second wireless power transmission apparatus 200 may inquire the cooking appliance 300 whether there is stored operation history information and the cooking appliance 300 may reply that there is no operation history information. According to an embodiment, even when there is no inquiry from the second wireless power transmission apparatus 200, the cooking appliance 300 may notify that there is no stored operation history information to the second wireless power transmission apparatus 200 when the BLE connection is established.

Upon identifying that there is no operation history information stored in the cooking appliance 300, the second wireless power transmission apparatus 200 may request the user for an input for selecting a recipe through the user interface, in operation 1105. When there is no operation history information stored in the cooking appliance 300, the cooking appliance 300 needs to start new cooking because the cooking appliance 300 was not performing cooking before being detected by the second wireless power transmission apparatus 200. Thus, the user is requested for recipe information to start the new cooking.

Upon receiving the input of selecting the recipe from the user in operation 1106, the second wireless power transmission apparatus 200 may transmit power to the cooking appliance 300 based on the selected recipe, in operation 1107.

An embodiment illustrated in FIG. 11 may correspond to a process when the cooking appliance 300 first starts cooking on the second wireless power transmission apparatus 200.

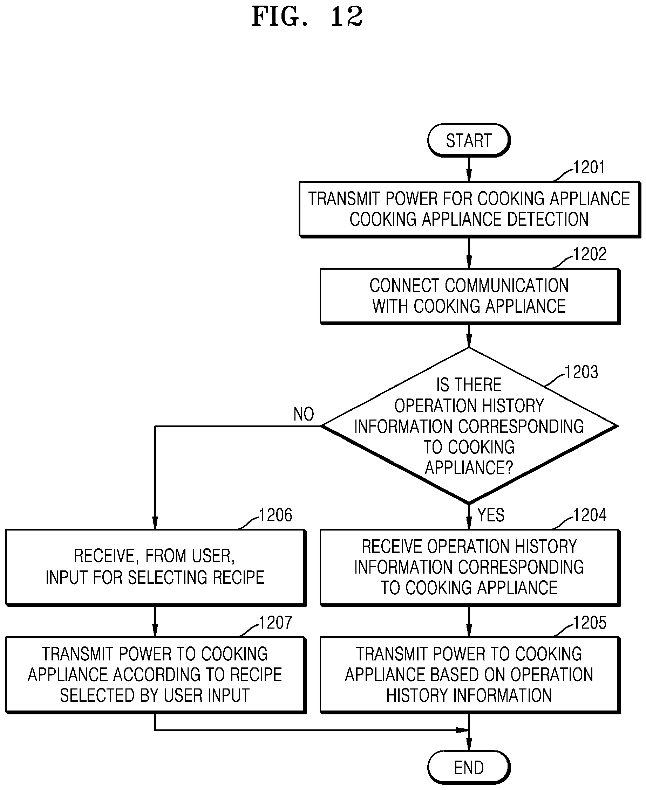

FIGS. 12, 13, 14, 15 and 16 are flowcharts illustrating an example method of linking and controlling operations of a plurality of wireless power transmission apparatuses, according to an embodiment of the present disclosure. It is assumed that operations included in the flowcharts of FIGS. 12 to 16 are performed by the second wireless power transmission apparatus 200 unless described otherwise.

The flowcharts of FIGS. 12, 13, 14, 15 and 16 (which may be referred to as FIGS. 12 to 16) are organized in terms of the second wireless power transmission apparatus 200 based on the processes described above with reference to FIGS. 6 to 11, and thus, details described above may also be applied to the flowcharts of FIGS. 12 to 16.

Referring to FIG. 12, in operation 1201, the second wireless power transmission apparatus 200 may transmit power for cooking appliance detection and detect the cooking appliance 300 accordingly. In operation 1202, communication may be connected between the second wireless power transmission apparatus 200 and the cooking appliance 300.

In operation 1203, the second wireless power transmission apparatus 200 determines whether there is the operation history information corresponding to the cooking appliance 300. According to an embodiment, when the operation history information corresponding to the cooking appliance 300 is stored in any one of the cooking appliance 300, the first wireless power transmission apparatus 100, and the server 10, the second wireless power transmission apparatus 200 may determine that there is the operation history information corresponding to the cooking appliance 300. However, when the operation history information is requested to any one of the cooking appliance 300, the first wireless power transmission apparatus 100, and the server 10 but is not received, or when the operation history information is not received from any one of the cooking appliance 300, the first wireless power transmission apparatus 100, and the server 10 before a certain time from a time when the cooking appliance 300 is detected, the second wireless power transmission apparatus 200 may determine that there is no operation history information corresponding to the cooking appliance 300.

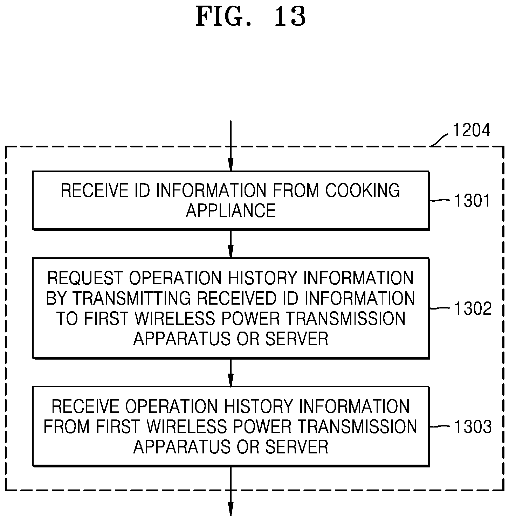

When there is the operation history information corresponding to the cooking appliance 300, based on a result of determination in operation 1203, the second wireless power transmission apparatus 200 may receive the operation history information corresponding to the cooking appliance 300, in operation 1204. The second wireless power transmission apparatus 200 may receive the operation history information corresponding to the cooking appliance 300 in various manners, and various embodiments are illustrated in FIGS. 13, 14 and 15 (which may be referred to as FIGS. 13 to 15). The flowcharts of FIGS. 13 to 15 include detailed operations included in operation 1204.

Referring to FIG. 13, in operation 1301, the second wireless power transmission apparatus 200 may receive the ID information of the cooking appliance 300 from the cooking appliance 300. In operation 1302, the second wireless power transmission apparatus 200 may request the operation history information corresponding to the ID information by transmitting the received ID information to the first wireless power transmission apparatus 100 or the server 10.

The first wireless power transmission apparatus 100 may have matched the operation history information with the ID information of the cooking appliance 300 and stored the same previously while performing cooking by transmitting power to the cooking appliance 300. Upon receiving a request for the operation history information from the second wireless power transmission apparatus 200, the server 10 may request the first wireless power transmission apparatus 100 for the operation history information corresponding to the ID information and transmit the same to the second wireless power transmission apparatus 200. Also, the server 10 may match the operation history information with the ID information of the cooking appliance 300 and store the same in real time while the first wireless power transmission apparatus 100 is performing cooking through the cooking appliance 300.

In operation 1303, the second wireless power transmission apparatus 200 may receive the operation history information from the first wireless power transmission apparatus 100 or the server 10.

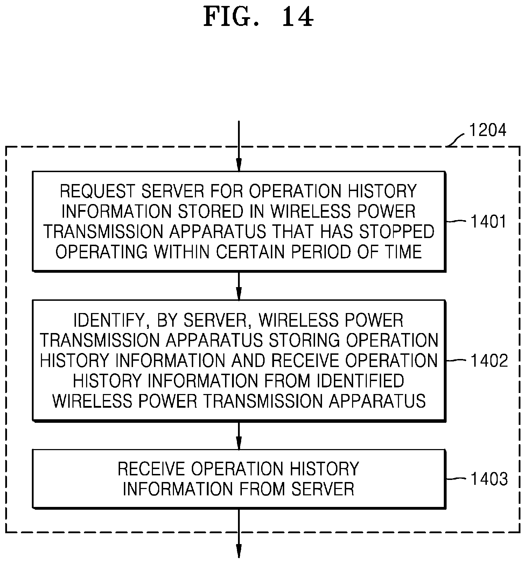

As described above with reference to FIG. 8D, when the IH container 400 is used instead of the cooking appliance 300 that is in the form of a small appliance, the operation history information is unable to be stored in the IH container 400 and there is no ID information corresponding to the IH container 400. FIG. 14 illustrates an embodiment that may be used when food is cooked through the IH container 400. The embodiment of FIG. 14 may be applied even when food is cooked through the cooking appliance 300 in the form of a small appliance.

Referring to FIG. 14, in operation 1401, the second wireless power transmission apparatus 200 may request the server 10 for operation history information stored in a wireless power transmission apparatus that has stopped operating within a certain period of time. In detail, when there is a wireless power transmission apparatus that has stopped operating for a certain period of time before a time when the cooking appliance 300 is detected, the second wireless power transmission apparatus 200 may request the server 10 for operation history information stored in the corresponding wireless power transmission apparatus.

In operation 1402, the server 10 may identify the wireless power transmission apparatus storing the operation history information and receive the operation history information from the identified wireless power transmission apparatus. In detail, the server 10 may identify whether there is a wireless power transmission apparatus nearby, which has stopped operating for a certain period of time from a time when the second wireless power transmission apparatus 200 detected the cooking appliance 300 and stores operation history information, and when the wireless power transmission apparatus is identified, receive the operation history information by requesting the wireless power transmission apparatus for the same.

In operation 1403, the second wireless power transmission apparatus 200 may receive the operation history information from the server 10.

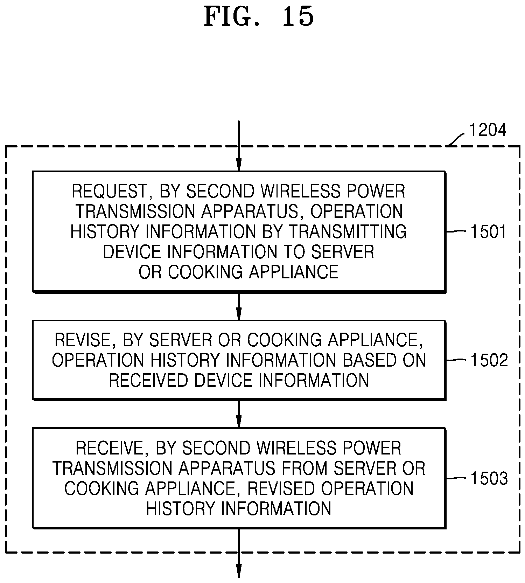

According to an embodiment, the operation history information may need to be revised according to the maximum output of the second wireless power transmission apparatus 200, and in this case, the server 10 or the cooking appliance 300 may revise the operation history information and transmit the same to the second wireless power transmission apparatus 200. A corresponding embodiment is illustrated in FIG. 15.

Referring to FIG. 15, in operation 1501, the second wireless power transmission apparatus 200 may request the operation history information by transmitting the device information of the second wireless power transmission apparatus 200 to the server 10 or the cooking appliance 300. The second wireless power transmission apparatus 200 may also transmit the ID information of the cooking appliance 300 to the server 10. This is because the second wireless power transmission apparatus 200 requests the server 10 for the operation history information corresponding to the cooking appliance 300.

In operation 1502, the server 10 or the cooking appliance 300 may revise the operation history information based on the received device information. An example method of revising the operation history information based on the device information has been described above. According to an embodiment, the server 10 may obtain the operation history information corresponding to the cooking appliance 300, based on the ID information received from the second wireless power transmission apparatus 200, and revise the obtained operation history information based on the device information. Also, according to an embodiment, the server 10 or the cooking appliance 300 may revise the operation history information in consideration of not only the device information of the second wireless power transmission apparatus 200, but also the sensing information of the cooking appliance 300. A method of revising the operation history information also in consideration of a temperature (sensing information) measured by the cooking appliance 300 has been described above with reference to FIG. 9.

In operation 1503, the second wireless power transmission apparatus 200 may receive the revised operation history information from the server 10 or the cooking appliance 300.

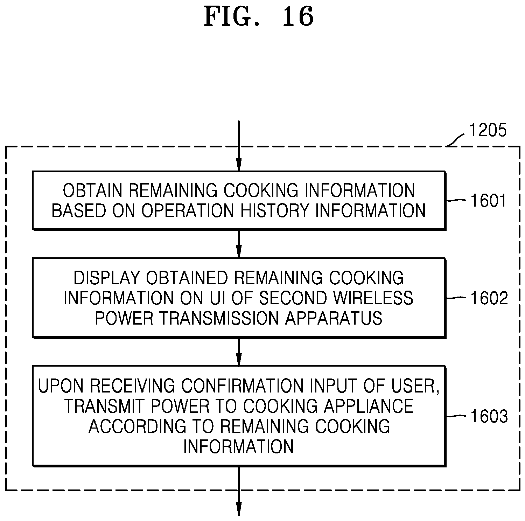

Referring back to FIG. 12, upon receiving the operation history information, the second wireless power transmission apparatus 200 may transmit power to the cooking appliance 300 based on the operation history information, in operation 1205. Operations included in operation 1205 are illustrated in FIG. 16.

Referring to FIG. 16, in operation 1601, the second wireless power transmission apparatus 200 may obtain the remaining cooking information based on the operation history information. As described above, the second wireless power transmission apparatus 200 may obtain the remaining cooking information from the recipe information and the cooking status information, which are included in the operation history information.

In operation 1602, the second wireless power transmission apparatus 200 may display the obtained remaining cooking information on the user interface of the second wireless power transmission apparatus 200. In operation 1603, upon receiving a confirmation input of the user, the second wireless power transmission apparatus 200 may transmit power to the cooking appliance 300 according to the remaining cooking information.

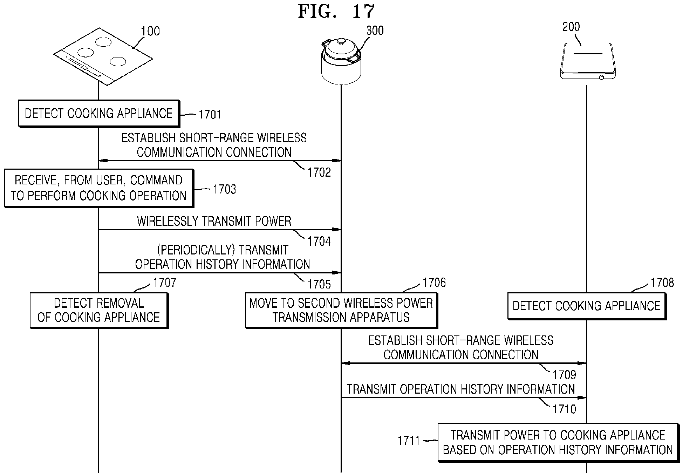

FIGS. 17, 18, 19, 20, 21, 22, 23 and 24 are signal flow diagrams illustrating example operations performed for each apparatus according to time, according to an embodiment of the present disclosure.

FIG. 17 is a signal flow diagram illustrating example operations performed between wireless power transmission apparatuses and a cooking appliance when the cooking appliance is moved to a second wireless power transmission apparatus while being used by a first wireless power transmission apparatus, according to an embodiment of the present disclosure.

Referring to FIG. 17, in operation 1701, the first wireless power transmission apparatus 100 may detect the cooking appliance 300. The first wireless power transmission apparatus 100 may detect the cooking appliance 300 by performing powering described above. When the first wireless power transmission apparatus 100 detects the cooking appliance 300, a short-range wireless communication (e.g. BLE communication) connection may be established between the first wireless power transmission apparatus 100 and the cooking appliance 300, in operation 1702.

In operation 1703, the first wireless power transmission apparatus 100 may receive, from the user, a command to perform a cooking operation. For example, the user may set a fire power level and a cooking time through the user interface of the first wireless power transmission apparatus 100 or may input a name of a specific menu.

Upon receiving the cooking operation command of the user, the first wireless power transmission apparatus 100 may wirelessly transmit power to the cooking appliance 300 in operation 1704 so that the cooking operation is performed.

The first wireless power transmission apparatus 100 may periodically or aperiodically transmit the operation history information to the cooking appliance 300 while performing cooking by transmitting power to the cooking appliance 300 (operation 1705). The cooking appliance 300 may store the operation history information received from the first wireless power transmission apparatus 100 in the embedded memory 350.

When the cooking appliance 300 is moved to the second wireless power transmission apparatus 200 in operation 1706, the first wireless power transmission apparatus 100 may detect removal of the cooking appliance 300 in operation 1707.

When the cooking appliance 300 is moved to the second wireless power transmission apparatus 200, the second wireless power transmission apparatus 200 detects the cooking appliance 300 in operation 1708, and a short-range wireless communication connection may be established between the second wireless power transmission apparatus 200 and the cooking appliance 300 in operation 1709.

When the short-range wireless communication connection is established with the second wireless power transmission apparatus 200, the cooking appliance 300 may transmit the operation history information to the second wireless power transmission apparatus 200 in operation 1710. The operation history information being transmitted may be operation history information received from the first wireless power transmission apparatus 100 and stored in the memory 350 in operation 1705.

In operation 1711, the second wireless power transmission apparatus 200 may continuously perform the remaining cooking operation by transmitting power to the cooking appliance 300 based on the operation history information.

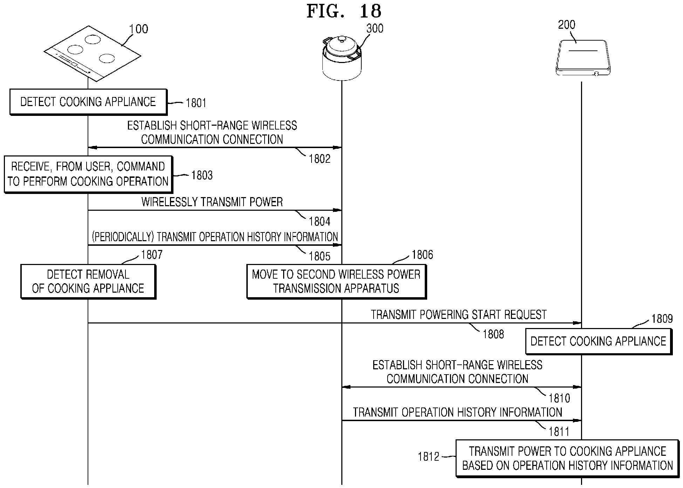

FIG. 18 is a signal flow diagram illustrating an example in which a first wireless power transmission apparatus requests a second wireless power transmission apparatus to start powering, upon detecting removal of a cooking appliance according to various embodiments.

Referring to FIG. 18, in operation 1801, the first wireless power transmission apparatus 100 may detect the cooking appliance 300. The first wireless power transmission apparatus 100 may detect the cooking appliance 300 by performing powering described above. When the first wireless power transmission apparatus 100 detects the cooking appliance 300, a short-range wireless communication (e.g. BLE communication) connection may be established between the first wireless power transmission apparatus 100 and the cooking appliance 300, in operation 1802.

In operation 1803, the first wireless power transmission apparatus 100 may receive, from the user, a command to perform a cooking operation. For example, the user may set a fire power level and a cooking time through the user interface of the first wireless power transmission apparatus 100 or may input a name of a specific menu.

Upon receiving the cooking operation command of the user, the first wireless power transmission apparatus 100 may wirelessly transmit power to the cooking appliance 300 in operation 1804 so that the cooking operation is performed.

The first wireless power transmission apparatus 100 may periodically or aperiodically transmit the operation history information to the cooking appliance 300 while performing cooking by transmitting power to the cooking appliance 300 (operation 1805). The cooking appliance 300 may store the operation history information received from the first wireless power transmission apparatus 100 in the embedded memory 350.

When the cooking appliance 300 is moved to the second wireless power transmission apparatus 200 in operation 1806, the first wireless power transmission apparatus 100 may detect removal of the cooking appliance 300 in operation 1807.

Upon detecting the removal of the cooking appliance 300, the first wireless power transmission apparatus 100 may transmit a powering start request to the second wireless power transmission apparatus 200 (operation 1808). In the embodiment of FIG. 18, the first wireless power transmission apparatus 100 transmits the powering start request only to the second wireless power transmission apparatus 200, but when there are one or more wireless power transmission apparatuses nearby, the first wireless power transmission apparatus 100 may transmit the powering start request to all wireless power transmission apparatuses. This is because the first wireless power transmission apparatus 100 is unable to determine to which one of a plurality of wireless power transmission apparatuses the cooking appliance 300 has been moved. Also, according to an embodiment, when the cooking appliance 300 is detected by one wireless power transmission apparatus after the plurality of wireless power transmission apparatuses start powering according to a request of the first wireless power transmission apparatus 100, the wireless power transmission apparatus that has detected the cooking appliance 300 may transmit a powering stop request to the remaining wireless power transmission apparatuses.

The second wireless power transmission apparatus 200 may start powering according to the received request, detect the cooking appliance 300 in operation 1809, and establish a short-range wireless communication connection with the cooking appliance 300 in operation 1810.

When the short-range wireless communication connection is established between the second wireless power transmission apparatus 200 and the cooking appliance 300, the cooking appliance 300 may transmit, to the second wireless power transmission apparatus 200, the operation history information stored in the memory 350, in operation 1811.

In operation 1812, the second wireless power transmission apparatus 200 may continuously perform the remaining cooking operation by transmitting power to the cooking appliance 300 based on the received operation history information.

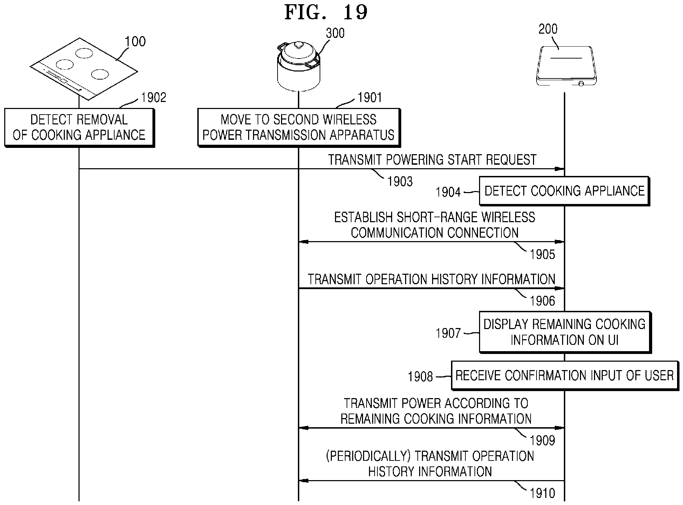

FIG. 19 is a signal flow diagram illustrating an example in which remaining cooking information is displayed on a user interface (UI) of a second wireless power transmission apparatus and a remaining cooking operation is performed upon receiving a confirmation input of a user according to various embodiments. FIG. 19 illustrates an example operation in which the cooking appliance 300 is moved from the first wireless power transmission apparatus 100 to the second wireless power transmission apparatus 200, but operations 1701 to 1705 of FIG. 17 may be first performed previously.

Referring to FIG. 19, when the cooking appliance 300 is moved to the second wireless power transmission apparatus 200 in operation 1901 while performing a cooking operation on the first wireless power transmission apparatus 100, the first wireless power transmission apparatus 100 may detect removal of the cooking appliance 300 in operation 1902.

Upon detecting the removal of the cooking appliance 300, the first wireless power transmission apparatus 100 may transmit a powering start request to the second wireless power transmission apparatus 200, in operation 1903.

The second wireless power transmission apparatus 200 may start powering according to the received request, detect the cooking appliance 300 in operation 1904, and establish a short-range wireless communication connection with the cooking appliance 300 in operation 1905.

When the short-range wireless communication connection is established between the second wireless power transmission apparatus 200 and the cooking appliance 300, the cooking appliance 300 may transmit, to the second wireless power transmission apparatus 200, the operation history information stored in the memory 350, in operation 1906.

Upon receiving the operation history information, the second wireless power transmission apparatus 200 obtains the remaining cooking information therefrom and display the remaining cooking information on the user interface of the second wireless power transmission apparatus 200, in operation 1907.

Upon receiving a confirmation input (a confirmation input for performing the remaining cooking operation) from the user in operation 1908, the second wireless power transmission apparatus 200 may continuously perform the remaining cooking operation by transmitting power to the cooking appliance 300 according to the remaining cooking information, in operation 1909.

In operation 1910, the second wireless power transmission apparatus 200 may periodically or aperiodically transmit the operation history information to the cooking appliance 300, and the cooking appliance 300 may store the received cooking information in the memory 350.

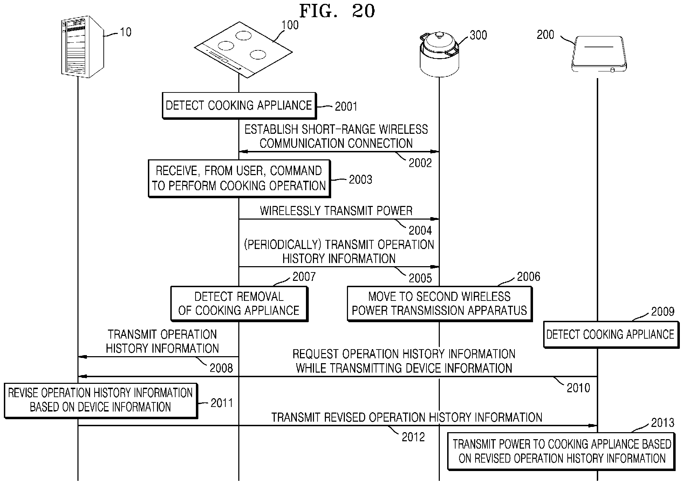

As described above, the server 10 or the cooking appliance 300 may revise the operation history information, and FIGS. 20, 21, 22 and 23 illustrate various examples thereof.

FIG. 20 is a signal flow diagram illustrating an example in which a server revises operation history information based on device information of a second wireless power transmission apparatus and transmits the same to the second wireless power transmission apparatus according to various embodiments.

Referring to FIG. 20, in operation 2001, the first wireless power transmission apparatus 100 may detect the cooking appliance 300. The first wireless power transmission apparatus 100 may detect the cooking appliance 300 by performing powering described above. When the first wireless power transmission apparatus 100 detects the cooking appliance 300, a short-range wireless communication (e.g. BLE communication) connection may be established between the first wireless power transmission apparatus 100 and the cooking appliance 300, in operation 2002.

In operation 2003, the first wireless power transmission apparatus 100 may receive, from the user, a command to perform a cooking operation. For example, the user may set a fire power level and a cooking time through the user interface of the first wireless power transmission apparatus 100 or may input a name of a specific menu.

Upon receiving the cooking operation command of the user, the first wireless power transmission apparatus 100 may wirelessly transmit power to the cooking appliance 300 in operation 2004 so that the cooking operation is performed.

The first wireless power transmission apparatus 100 may periodically or aperiodically transmit the operation history information to the cooking appliance 300 while performing cooking by transmitting power to the cooking appliance 300 (operation 2005). The cooking appliance 300 may store the operation history information received from the first wireless power transmission apparatus 100 in the embedded memory 350.

When the cooking appliance 300 is moved to the second wireless power transmission apparatus 200 in operation 2006, the first wireless power transmission apparatus 100 may detect removal of the cooking appliance 300 in operation 2007.

Upon detecting the removal of the cooking appliance 300, the first wireless power transmission apparatus 100 may transmit the operation history information to the server 10 in operation 2008.

When the cooking appliance 300 removed from the first wireless power transmission apparatus 100 is moved to the second wireless power transmission apparatus 200, the second wireless power transmission apparatus 200 may detect the cooking appliance 300 (operation 2009). Upon detecting the cooking appliance 300, the second wireless power transmission apparatus 200 may request the server 10 for the operation history information corresponding to the cooking appliance 300 while transmitting its device information, in operation 2010.

In operation 2011, the server 10 may revise the operation history information based on the device information of the second wireless power transmission apparatus 200. A method of revising the operation history information based on the device information has been described above with reference to FIG. 9.

The server 10 transmits the revised operation history information to the second wireless power transmission apparatus 200 in operation 2012, and the second wireless power transmission apparatus 200 may transmit power to the cooking appliance 300 based on the revised operation history information in operation 2013.

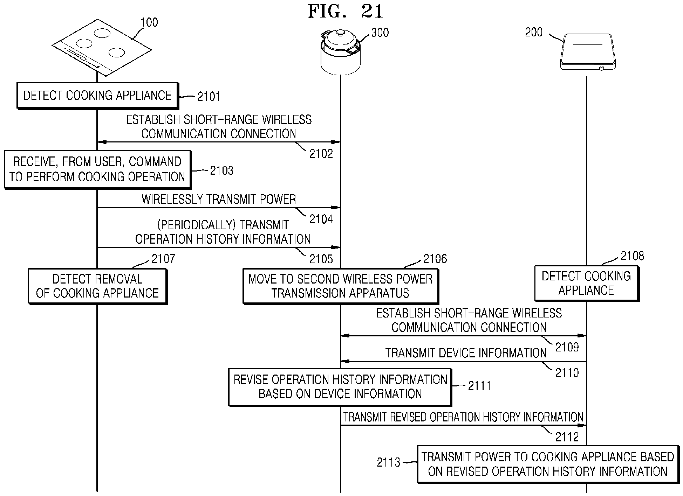

FIG. 21 is a signal flow diagram illustrating an example in which a cooking appliance revises operation history information based on device information of a second wireless power transmission apparatus and transmits the same to the second wireless power transmission apparatus according to various embodiments.

Referring to FIG. 21, in operation 2101, the first wireless power transmission apparatus 100 may detect the cooking appliance 300. The first wireless power transmission apparatus 100 may detect the cooking appliance 300 by performing powering described above. When the first wireless power transmission apparatus 100 detects the cooking appliance 300, a short-range wireless communication (e.g. BLE communication) connection may be established between the first wireless power transmission apparatus 100 and the cooking appliance 300, in operation 2102.

In operation 2103, the first wireless power transmission apparatus 100 may receive, from the user, a command to perform a cooking operation. For example, the user may set a fire power level and a cooking time through the user interface of the first wireless power transmission apparatus 100 or may input a name of a specific menu.

Upon receiving the cooking operation command of the user, the first wireless power transmission apparatus 100 may wirelessly transmit power to the cooking appliance 300 in operation 2104 so that the cooking operation is performed.

The first wireless power transmission apparatus 100 may periodically or aperiodically transmit the operation history information to the cooking appliance 300 while performing cooking by transmitting power to the cooking appliance 300 (operation 2105). The cooking appliance 300 may store the operation history information received from the first wireless power transmission apparatus 100 in the embedded memory 350.

When the cooking appliance 300 is moved to the second wireless power transmission apparatus 200 in operation 2106, the first wireless power transmission apparatus 100 may detect removal of the cooking appliance 300 in operation 2107.

When the cooking appliance 300 removed from the first wireless power transmission apparatus 100 is moved to the second wireless power transmission apparatus 200, the second wireless power transmission apparatus 200 detects the cooking appliance 300 in operation 2108, and a short-range wireless communication connection may be established between the second wireless power transmission apparatus 200 and the cooking appliance 300 in operation 2109.

In operation 2110, the second wireless power transmission apparatus 200 may request the cooking appliance 300 for the operation history information by transmitting its device information. The cooking appliance 300 may revise the operation history information based on the device information of the second wireless power transmission apparatus 200, in operation 2111, and transmit the revised operation history information to the second wireless power transmission apparatus 200, in operation 2112. In operation 2113, the second wireless power transmission apparatus 200 may transmit power to the cooking appliance 300 based on the revised operation history information.

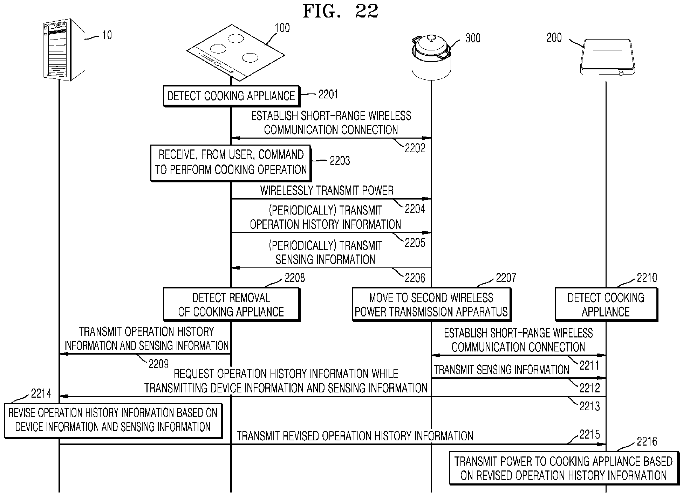

FIG. 22 is a signal flow diagram illustrating an example in which a server revises operation history information based on device information of a second wireless power transmission apparatus and sensing information of a cooking appliance, and transmits the same to the second wireless power transmission apparatus according to various embodiments.

Referring to FIG. 22, in operation 2201, the first wireless power transmission apparatus 100 may detect the cooking appliance 300. The first wireless power transmission apparatus 100 may detect the cooking appliance 300 by performing powering described above. When the first wireless power transmission apparatus 100 detects the cooking appliance 300, a short-range wireless communication (e.g. BLE communication) connection may be established between the first wireless power transmission apparatus 100 and the cooking appliance 300, in operation 2202.

In operation 2203, the first wireless power transmission apparatus 100 may receive, from the user, a command to perform a cooking operation. For example, the user may set a fire power level and a cooking time through the user interface of the first wireless power transmission apparatus 100 or may input a name of a specific menu.

Upon receiving the cooking operation command of the user, the first wireless power transmission apparatus 100 may wirelessly transmit power to the cooking appliance 300 in operation 2204 so that the cooking operation is performed.

The first wireless power transmission apparatus 100 may periodically or aperiodically transmit the operation history information to the cooking appliance 300 while performing cooking by transmitting power to the cooking appliance 300 (operation 2205). While performing cooking, the cooking appliance 300 may periodically or aperiodically transmit sensing information (e.g., a value measured by a temperature sensor) to the first wireless power transmission apparatus 100 (operation 2206). The cooking appliance 300 and the first wireless power transmission apparatus 100 may respectively store the received operation history information and the received sensing information in embedded memories.

When the cooking appliance 300 is moved to the second wireless power transmission apparatus 200 in operation 2207, the first wireless power transmission apparatus 100 may detect removal of the cooking appliance 300 in operation 2208.

Upon detecting the removal of the cooking appliance 300, the first wireless power transmission apparatus 100 may transmit the operation history information and the sensing information to the server 10 in operation 2209. The sensing information transmitted by the first wireless power transmission apparatus 100 to the server 10 is sensing information stored last in the first wireless power transmission apparatus 100 before the cooking appliance 300 is removed from the first wireless power transmission apparatus 100, and will be referred to as first sensing information for convenience of description.

When the cooking appliance 300 removed from the first wireless power transmission apparatus 100 is moved to the second wireless power transmission apparatus 200, the second wireless power transmission apparatus 200 may detect the cooking appliance 300 (operation 2210). When a short-range wireless communication connection is established between the second wireless power transmission apparatus 200 and the cooking appliance 300 in operation 2211, the cooking appliance 300 may transmit the sensing information to the second wireless power transmission apparatus 200 in operation 2212. Here, the sensing information transmitted by the cooking appliance 300 to the second wireless power transmission apparatus 200 is sensing information measured last by the cooking appliance 300 before operation 2212 is performed, and will be referred to as second sensing information for convenience of description.

In operation 2213, the second wireless power transmission apparatus 200 may request the operation history information while transmitting, to the server 10, its device information and sensing information (second sensing information).

In operation 2214, the server 10 may revise the operation history information based on the device information and sensing information. The server 10 may revise the operation history information using the device information while reflecting a difference between the first sensing information and the second sensing information. According to an embodiment, when the first sensing information is a temperature measured last by the cooking appliance 300 before being removed from the first wireless power transmission apparatus 100 and the second sensing information is a temperature measured by the cooking appliance 300 at a time when the cooking appliance 300 is moved to the second wireless power transmission apparatus 200, and a great difference between the first sensing information and the second sensing information indicates that content in the cooking appliance 300 is cooed down a lot, and thus, to complete cooking, a time for transmitting power to the cooking appliance 300 needs to be added. A method of revising the operation history information based on the device information and the sensing information has been described above with reference to FIG. 9.

The server 10 transmits the revised operation history information to the second wireless power transmission apparatus 200 in operation 2215, and the second wireless power transmission apparatus 200 may transmit power to the cooking appliance 300 based on the revised operation history information in operation 2216.

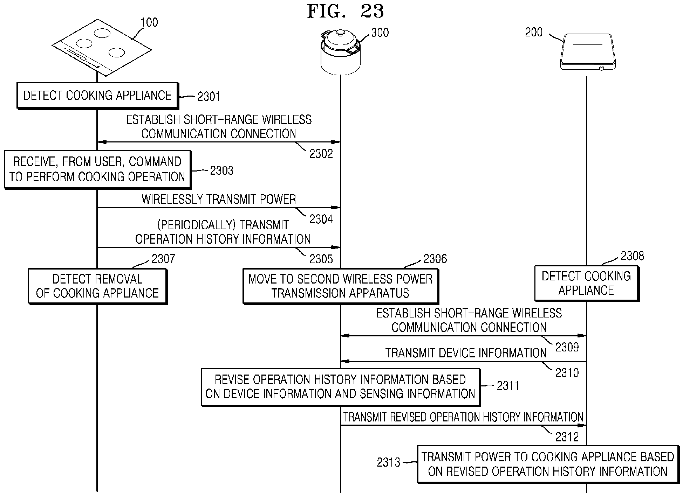

FIG. 23 is a signal flow diagram illustrating an example in which a cooking appliance revises operation history information based on device information of a second wireless power transmission apparatus and sensing information of a cooking appliance, and transmits the same to the second wireless power transmission apparatus according to various embodiments.

Referring to FIG. 23, in operation 2301, the first wireless power transmission apparatus 100 may detect the cooking appliance 300. The first wireless power transmission apparatus 100 may detect the cooking appliance 300 by performing powering described above. When the first wireless power transmission apparatus 100 detects the cooking appliance 300, a short-range wireless communication (e.g. BLE communication) connection may be established between the first wireless power transmission apparatus 100 and the cooking appliance 300, in operation 2302.

In operation 2303, the first wireless power transmission apparatus 100 may receive, from the user, a command to perform a cooking operation. For example, the user may set a fire power level and a cooking time through the user interface of the first wireless power transmission apparatus 100 or may input a name of a specific menu.

Upon receiving the cooking operation command of the user, the first wireless power transmission apparatus 100 may wirelessly transmit power to the cooking appliance 300 in operation 2304 so that the cooking operation is performed.

The first wireless power transmission apparatus 100 may periodically or aperiodically transmit the operation history information to the cooking appliance 300 while performing cooking by transmitting power to the cooking appliance 300 (operation 2305). The cooking appliance 300 may store the operation history information received from the first wireless power transmission apparatus 100 in the embedded memory 350.

When the cooking appliance 300 is moved to the second wireless power transmission apparatus 200 in operation 2306, the first wireless power transmission apparatus 100 may detect removal of the cooking appliance 300 in operation 2307.

When the cooking appliance 300 removed from the first wireless power transmission apparatus 100 is moved to the second wireless power transmission apparatus 200, the second wireless power transmission apparatus 200 detects the cooking appliance 300 in operation 2308, and a short-range wireless communication connection may be established between the second wireless power transmission apparatus 200 and the cooking appliance 300 in operation 2309.

In operation 2310, the second wireless power transmission apparatus 200 may request the cooking appliance 300 for the operation history information by transmitting its device information. The cooking appliance 300 may revise the operation history information based on the sensing information and device information of the second wireless power transmission apparatus 200, in operation 2311. The sensing information may include sensing information (first sensing information) stored last before the cooking appliance 300 is removed from the first wireless power transmission apparatus 100 and sensing information (second sensing information) stored at a time when the cooking appliance 300 is moved to the second wireless power transmission apparatus 200. According to an embodiment, the sensing information may be a value measured by a temperature sensor included in the cooking appliance 300, and a method of reflecting the sensing information to the revising of the operation history information when the sensing information is a temperature has been described above with reference to FIG. 22.

In operation 2312, the cooking appliance 300 may transmit the revised operation history information to the second wireless power transmission apparatus 200. In operation 2313, the second wireless power transmission apparatus 200 may transmit power to the cooking appliance 300 based on the revised operation history information.

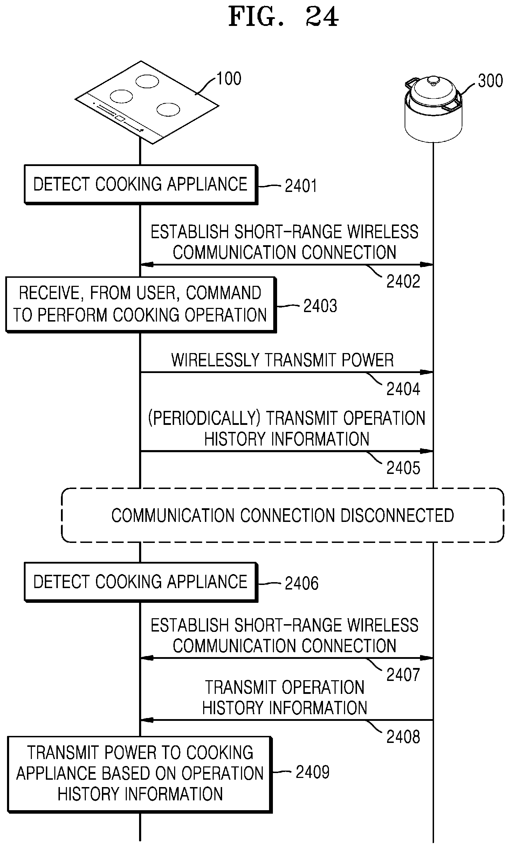

FIG. 24 is a signal flow diagram illustrating an example operation when a communication connection between a wireless power transmission apparatus and a cooking appliance is disconnected and connected again during cooking, according to various embodiments.

The embodiment of FIG. 24 may occur in following situations.
1) While the cooking operation is performed with the cooking appliance 300 placed on the first wireless power transmission apparatus 100, the user temporarily moves the cooking appliance 300 from the first wireless power transmission apparatus 100 to another place and places the cooking appliance 300 back on the first wireless power transmission apparatus 100 out of necessity.
2) While the cooking operation is performed with the cooking appliance 300 placed on the first wireless power transmission apparatus 100, power of the first wireless power transmission apparatus 100 is turned off and back on.

Referring to FIG. 24, in operation 2401, the first wireless power transmission apparatus 100 may detect the cooking appliance 300. The first wireless power transmission apparatus 100 may detect the cooking appliance 300 by performing powering described above. When the first wireless power transmission apparatus 100 detects the cooking appliance 300, a short-range wireless communication (e.g. BLE communication) connection may be established between the first wireless power transmission apparatus 100 and the cooking appliance 300, in operation 2402.

In operation 2403, the first wireless power transmission apparatus 100 may receive, from the user, a command to perform a cooking operation. For example, the user may set a fire power level and a cooking time through the user interface of the first wireless power transmission apparatus 100 or may input a name of a specific menu.

Upon receiving the cooking operation command of the user, the first wireless power transmission apparatus 100 may wirelessly transmit power to the cooking appliance 300 in operation 2404 so that the cooking operation is performed.

The first wireless power transmission apparatus 100 may periodically or aperiodically transmit the operation history information to the cooking appliance 300 while performing cooking by transmitting power to the cooking appliance 300 (operation 2405). The cooking appliance 300 may store the operation history information received from the first wireless power transmission apparatus 100 in the embedded memory 350.

When a wireless communication connection between the first wireless power transmission apparatus 100 and the cooking appliance 300 is disconnected after operation 2405 is performed, the first wireless power transmission apparatus 100 may perform powering again to detect the cooking appliance 300 (operation 2406). When the first wireless power transmission apparatus 100 detects the cooking appliance 300, a short-range wireless communication connection may be established between the first wireless power transmission apparatus 100 and the cooking appliance 300, in operation 2407.

When the short-range wireless communication connection is established between the first wireless power transmission apparatus 100 and the cooking appliance 300, the cooking appliance 300 may transmit, to the first wireless power transmission apparatus 100, the operation history information that is stored last (operation 2408). In operation 2409, the first wireless power transmission apparatus 100 may transmit power to the cooking appliance 300 based on the received operation history information.

In the embodiments described above, the first and second wireless power transmission apparatuses 100 and 200 perform control operations of transmitting power to the cooking appliance 300 according to the recipe information or the remaining cooking information, but on the other hand, the cooking appliance 300 may control operations of the first and second wireless power transmission apparatuses 100 and 200. In other words, when the cooking appliance 300 transmits a command to the first and second wireless power transmission apparatuses 100 and 200 according to the recipe information or the remaining cooking information, the first and second wireless power transmission apparatuses 100 and 200 may transmit power to the cooking appliance 300 according to the received command. It will be apparent that the cooking appliance 300 may control operations of the first and second wireless power transmission apparatuses 100 and 200 not only in embodiments described below, but also in the embodiments described above.

Hereinafter, embodiments in which, while the cooking appliance 300 is placed on the first wireless power transmission apparatus 100 and performs a cooking operation by controlling the first wireless power transmission apparatus 100, cooking is resumed in a situation where a user requests a pause and then requests resumption of the cooking operation or where a communication connection between the cooking appliance 300 and the first wireless power transmission apparatus 100 is disconnected and then reconnected.

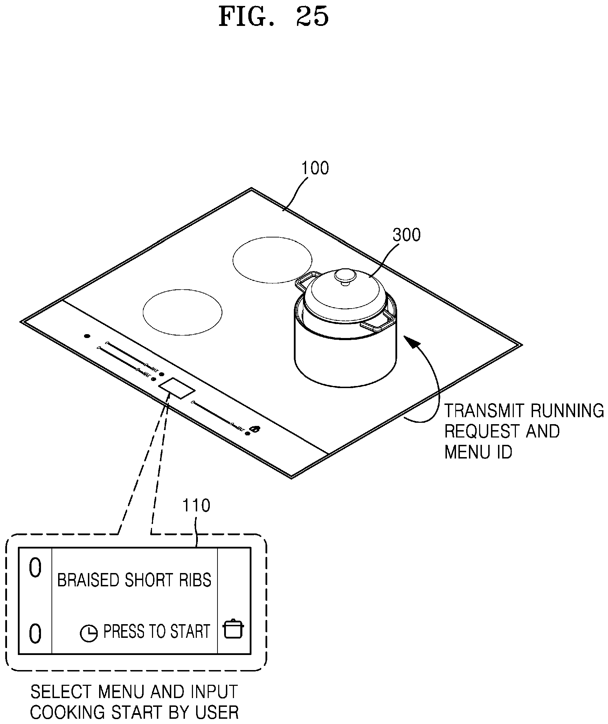

FIGS. 25, 26, 27, 28, 29 and 30 are diagrams illustrating example processes in which a cooking operation is temporarily stopped and resumed according to a request of a user while a cooking appliance performs a cooking operation on a wireless power transmission apparatus, according to an embodiment of the present disclosure.

Referring to FIG. 25, when the user selects a menu and inputs an operation request, i.ee.g., a running request, to start cooking, through the user interface 110 of the first wireless power transmission apparatus 100 while the cooking appliance 300 is placed on the first wireless power transmission apparatus 100, the first wireless power transmission apparatus 100 may transmit, to the cooking appliance 300, the running request of the cooking operation and a menu ID. The menu ID transmitted by the first wireless power transmission apparatus 100 to the cooking appliance 300 may be information matched to a menu name ("braised short ribs") input by the user and stored in a DB of the first wireless power transmission apparatus 100.

According to an embodiment, there are three types of operation requests that may be input by the user through the user interface 110 of the first wireless power transmission apparatus 100. A first type is a "running request" that is an operation request input by the user when cooking first starts or when a cooking operation is stopped and resumed. A second type is a "pause request" that is an operation request input by the user to temporarily stop a cooking operation while the cooking operation is performed. A third type is a "stop request" that is an operation request input by the user to completely stop a cooking operation. Upon receiving the operation request from the user, the first wireless power transmission apparatus 100 may transmit the same to the cooking appliance 300.

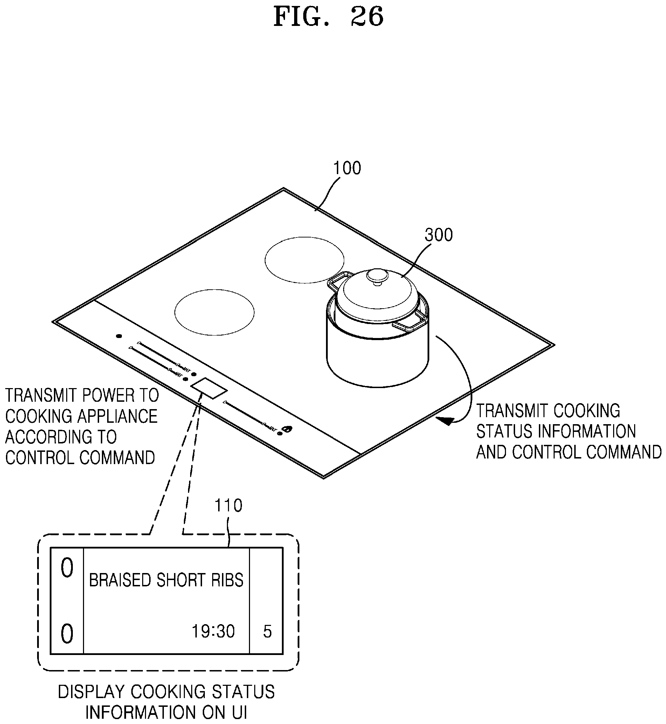

Referring to FIG. 26, in response to the running request and the menu ID, the cooking appliance 300 may transmit cooking status information and a control command to the first wireless power transmission apparatus 100. According to an embodiment, the cooking appliance 300 may request a cooking status change while transmitting the cooking status information to the first wireless power transmission apparatus 100, and the first wireless power transmission apparatus 100 may change a cooking status to "running" accordingly.

The cooking status information transmitted at this time includes information that the cooking operation is currently being performed by the cooking appliance 300, and thus, the first wireless power transmission apparatus 100 may display an operating status on the user interface 110, wherein the operating status may include information about a name of a menu being cooked ("braised short ribs"), a remaining cooking time ("19 minutes 30 seconds"), a fire power level ("5"), and a location of a burner where the cooking operation is being performed (a fire power level is displayed at a location of a corresponding burner on a UI).

The control command transmitted by the cooking appliance 300 to the first wireless power transmission apparatus 100 may include information about the amount of power to be transmitted and the duration of transmitting power. The first wireless power transmission apparatus 100 transmits power to the cooking appliance 300 according to the received control command.

Once the first wireless power transmission apparatus 100 has received the cooking status information from the cooking appliance 300 when the cooking operation started, and displayed the same on the user interface 110, the first wireless power transmission apparatus 100 may update the cooking status information until the cooking operation is paused or completed (e.g., the remaining cooking time is reduced with time).

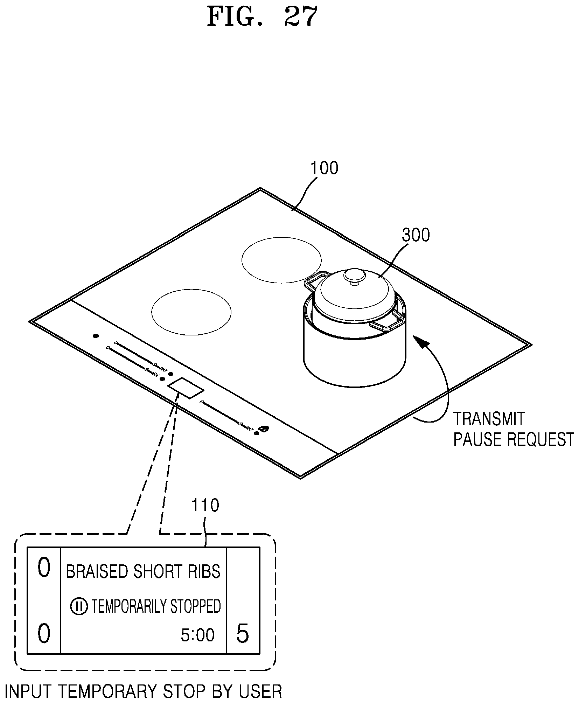

In a situation illustrated in FIG. 27, when the user inputs a pause request for the cooking operation through the user interface 110 of the first wireless power transmission apparatus 100, the first wireless power transmission apparatus 100 may display, on the user interface 110, information indicating that the cooking operation is temporarily stopped and transmit the pause request to the cooking appliance 300. The cooking appliance 300 may pause an operation (e.g., an operation of transmitting the control command to the first wireless power transmission apparatus 100) according to the received pause request.

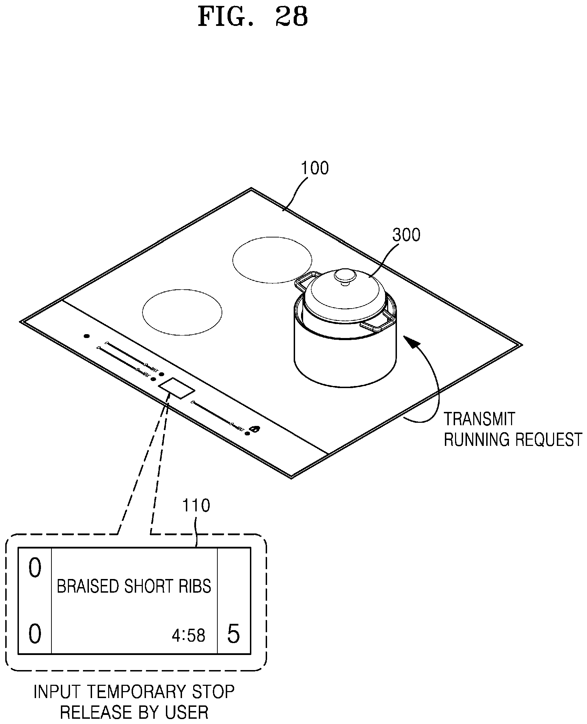

In a situation illustrated in FIG. 28, when the user inputs a temporary stop release (inputs the running request) through the user interface 110 of the first wireless power transmission apparatus 100, the first wireless power transmission apparatus 100 may display, on the user interface 110, information indicating that the cooking operation is resumed again (e.g., a guide comment about the temporary stop disappears and the remaining cooking time resumes) and transmit the running request to the cooking appliance 300.

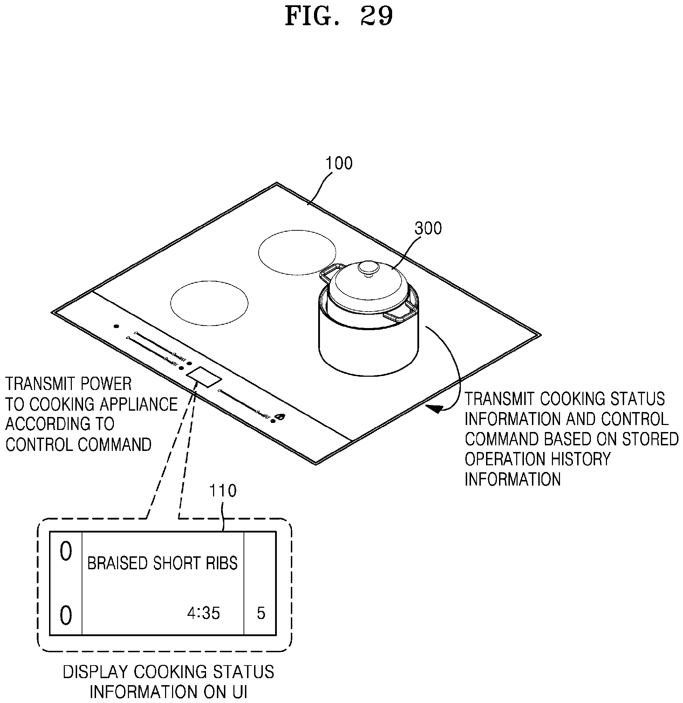

Referring to FIG. 29, upon receiving the running request from the first wireless power transmission apparatus 100, the cooking appliance 300 may transmit the cooking status information and the control command to the first wireless power transmission apparatus 100, based on the operation history information stored in the memory 350 inside the cooking appliance 300.

The cooking status information transmitted at this time may include information indicating that the cooking appliance 300 is currently performing the cooking operation. Accordingly, the first wireless power transmission apparatus 100 may display, on the user interface 110, the operating status indicating that the cooking operation is resumed.

As described above, the control command transmitted by the cooking appliance 300 to the first wireless power transmission apparatus 100 may include information about the amount of power to be transmitted and the duration of transmitting power, and accordingly, the first wireless power transmission apparatus 100 may transmit power to the cooking appliance 300 according to the received control command.

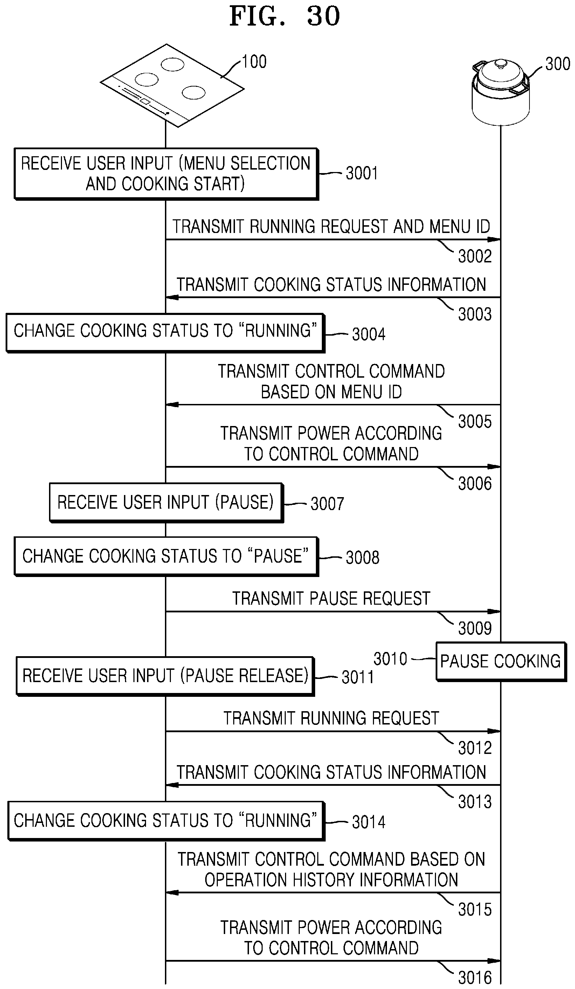

FIG. 30 is a signal flow diagram illustrating example operations performed by the first wireless power transmission apparatus 100 and the cooking appliance 300 according to time according to various embodiments.

Referring to FIG. 30, when the first wireless power transmission apparatus 100 receives, from a user through a user interface, an input for menu selection and cooking start request in operation 3001, the first wireless power transmission apparatus 100 may transmit, to the cooking appliance 300, a running request and menu ID for a cooking operation, in operation 3002.

According to an embodiment, when the input for the menu selection and cooking start request is received from the user before a communication connection is established between the first wireless power transmission apparatus 100 and the cooking appliance 300 (e.g., before the user places the cooking appliance 300 on the first wireless power transmission apparatus 100), the first wireless power transmission apparatus 100 may stand by while storing the menu ID corresponding to a received menu and transmit, to the cooking appliance 300, the stored menu ID and the running request together once the communication connection with the cooking appliance 300 is established.

In response to the reception of the running request and the menu ID, the cooking appliance 300 may transmit cooking status information to the first wireless power transmission apparatus 100 in operation 3003. The cooking status information transmitted at this time includes information indicating that the cooking operation is currently performed by the cooking appliance 300, and thus, the first wireless power transmission apparatus 100 changes a cooking status to "running" in operation 3004. When the cooking status is changed to "running", an operating status indicating that the cooking operation is being performed may be displayed on the user interface of the first wireless power transmission apparatus 100. The operating status may include information about a name ("braised short ribs") of the menu being cooked, a remaining cooking time ("19 minutes 30 seconds"), a fire power level ("5"), and a location of a burner performing the cooking operation (the fire power level is displayed at a corresponding location of the burner on UI).

According to an embodiment, when changing the cooking status to "running", the first wireless power transmission apparatus 100 may store the ID information of the cooking appliance 300 to record by which device the cooking status is being performed. This is to match, when the cooking operation is temporarily stopped and then resumed, operation history information received from the cooking appliance 300 with the cooking appliance 300.

In operation 3005, the cooking appliance 300 may transmit a control command to the first wireless power transmission apparatus 100 based on the received menu ID. In other words, the cooking appliance 300 may transmit, to the first wireless power transmission apparatus 100, the control command including information about the amount of power to be transmitted and the duration of transmitting power according to recipe information corresponding to the menu ID. The cooking appliance 300 may periodically or aperiodically store the operation history information according to a cooking progress while the cooking is being performed.

In operation 3006, the first wireless power transmission apparatus 100 may transmit power to the cooking appliance 300 according to the control command.

When the user inputs a pause request through the user interface of the first wireless power transmission apparatus 100 in operation 3007, the first wireless power transmission apparatus 100 may change the cooking status to "pause" in operation 3008 and transmit the pause request to the cooking appliance 300 in operation 3009. In operation 3010, the cooking appliance 300 may pause the cooking operation in response to the pause request. The cooking appliance 300 may transmit, to the first wireless power transmission apparatus 100, a control command to stop power transmission.

When the user inputs a pause release request (running request) through the user interface of the first wireless power transmission apparatus 100 in operation 3011, the first wireless power transmission apparatus 100 may transmit the running request to the cooking appliance 300 in operation 3012. Upon receiving the running request, the cooking appliance 300 may transmit, to the first wireless power transmission apparatus 100, the cooking status information stored in a memory (operation 3013). The cooking status information includes information indicating that the cooking operation is being performed, and thus, the first wireless power transmission apparatus 100 may change the cooking status to "running" and display the operating status on the user interface in operation 3014.

When the cooking appliance 300 transmits the control command to the first wireless power transmission apparatus 100 based on the operation history information, in operation 3015, the first wireless power transmission apparatus 100 may transmit power to the cooking appliance 300 according to the control command, in operation 3016.

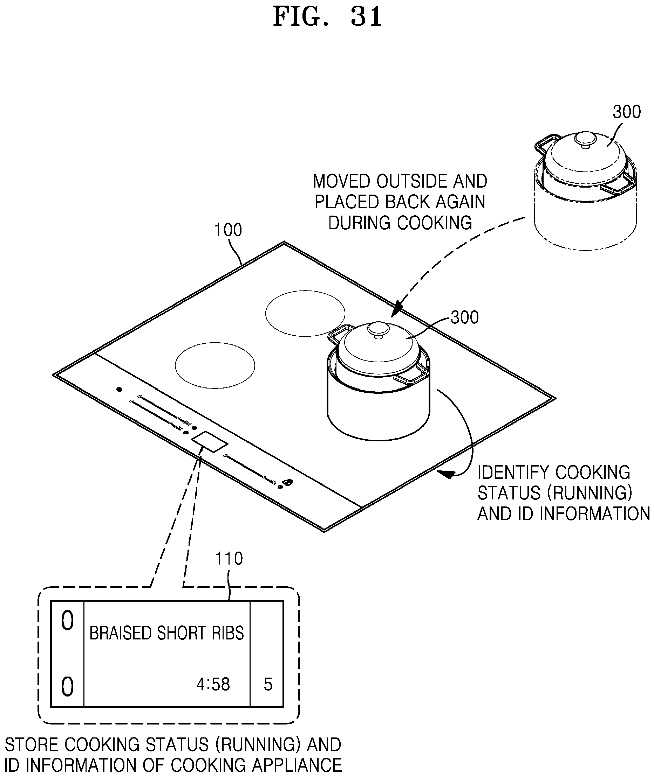

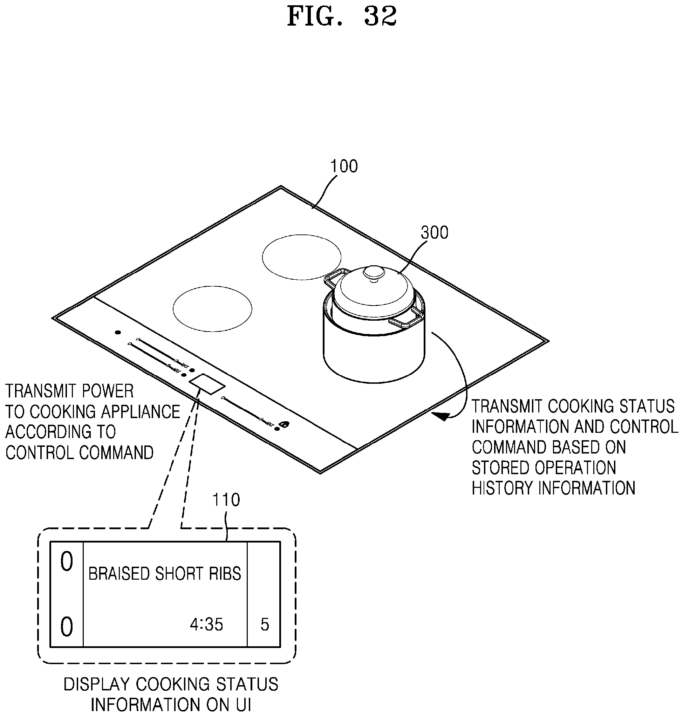

FIGS. 31, 32 and 33 are diagrams illustrating example operations performed in a situation where a communication connection between a wireless power transmission apparatus and a cooking appliance is disconnected and reconnected while the cooking appliance performs a cooking operation on the wireless power transmission apparatus, according to an embodiment of the present disclosure. It is assumed that the embodiments illustrated in FIG. 31 and 32 are continued from the situations illustrated in FIGS. 25 and 26.

Referring to FIG. 31, the cooking appliance 300 is moved outside the first wireless power transmission apparatus 100 and placed back on the first wireless power transmission apparatus 100 again during cooking. Accordingly, when the communication connection between the cooking appliance 300 and the first wireless power transmission apparatus 100 is disconnected and then the cooking appliance 300 approaches the first wireless power transmission apparatus 100, the first wireless power transmission apparatus 100 detects the cooking appliance 300 and a communication therebetween is connected again.

According to an embodiment, even when the cooking appliance 300 is removed from the first wireless power transmission apparatus 100 and the communication connection therebetween is broken, the first wireless power transmission apparatus 100 stores the ID information of the cooking appliance 300 received from the cooking appliance 300 during the cooking status (running) and a previous stage.

When the communication is connected, the cooking appliance 300 identifies that the cooking status of the first wireless power transmission apparatus 100 is "running" and identifies ID information stored by being matched with the cooking status. When the identified ID information is the ID information of the cooking appliance 300, the cooking appliance 300 may determine that the identified cooking status (running) corresponds to the cooking appliance 300.

Then, referring to FIG. 32, the cooking appliance 300 may transmit the cooking status information and the control command to the first wireless power transmission apparatus 100 based on the stored operation history information. The first wireless power transmission apparatus 100 may display the received cooking status information on the user interface 110 and transmit power to the cooking appliance 300 according to the received control command.

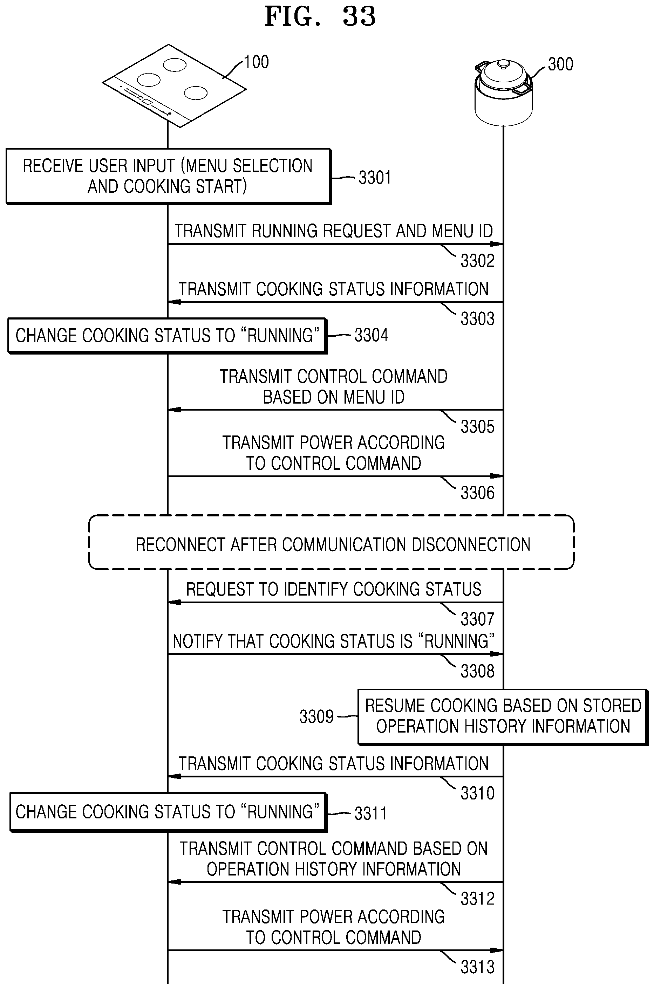

FIG. 33 is a signal flow diagram illustrating example operations performed by the first wireless power transmission apparatus 100 and the cooking appliance 300 according to time according to various embodiments.

Referring to FIG. 33, when the first wireless power transmission apparatus 100 receives, from a user through a user interface, an input for menu selection and cooking start request in operation 3301, the first wireless power transmission apparatus 100 may transmit, to the cooking appliance 300, a running request and menu ID for a cooking operation, in operation 3302.

In response to the reception of the running request and the menu ID, the cooking appliance 300 may transmit cooking status information to the first wireless power transmission apparatus 100 in operation 3303. The cooking status information transmitted at this time includes information indicating that the cooking operation is currently performed by the cooking appliance 300, and thus, the first wireless power transmission apparatus 100 changes a cooking status to "running" in operation 3304. When the cooking status is changed to "running", an operating status indicating that the cooking operation is being performed may be displayed on the user interface of the first wireless power transmission apparatus 100.

According to an embodiment, when changing the cooking status to "running", the first wireless power transmission apparatus 100 may store the ID information of the cooking appliance 300 to record by which device the cooking status is being performed. This is to, when the cooking operation is temporarily stopped and resumed due to communication disconnection or the like, match operation history information received from the cooking appliance 300 with the cooking appliance 300.

In operation 3305, the cooking appliance 300 may transmit a control command to the first wireless power transmission apparatus 100 based on the received menu ID. In other words, the cooking appliance 300 may transmit, to the first wireless power transmission apparatus 100, the control command including information about the amount of power to be transmitted and the duration of transmitting power according to recipe information corresponding to the menu ID. The cooking appliance 300 may periodically or aperiodically store the operation history information according to a cooking progress while the cooking is being performed.

In operation 3306, the first wireless power transmission apparatus 100 may transmit power to the cooking appliance 300 according to the control command.

It is assumed that the communication connection between the first wireless power transmission apparatus 100 and the cooking appliance 300 is disconnected and then reconnected. According to an embodiment, the cooking status stored in the first wireless power transmission apparatus 100 may change according to a time taken for reconnection after communication disconnection. At a time when the communication connection between the first wireless power transmission apparatus 100 and the cooking appliance 300 is disconnected, the cooking operation was performed, and thus, the cooking status may be set to "running" in the first wireless power transmission apparatus 100. Even after the communication connection between the first wireless power transmission apparatus 100 and the cooking appliance 300 is disconnected, a state in which the cooking status is "running" may be maintained for some time, but after a certain period of time, the cooking status may be changed to "ready". This is because it is unlikely that the first wireless power transmission apparatus 100 may resume the cooking operation when a sufficient time has elapsed after the communication connection is disconnected. In the embodiment of FIG. 33, it is assumed that the connection with the cooking appliance 300 is established again while the first wireless power transmission apparatus 100 maintains the cooking status to "running".

In operation 3307, the cooking appliance 300 may request the first wireless power transmission apparatus 100 to identify the cooking status. In response thereto, the first wireless power transmission apparatus 100 may notify the cooking appliance 300 that the cooking status is "running", in operation 3308. The first wireless power transmission apparatus 100 may also transmit, to the cooking appliance 300, ID information stored by being matched with the cooking status (running), and the cooking appliance 300 may compare the received ID information with its ID information and identify that the two pieces of ID information match each other to determine that the received cooking status corresponds to the cooking appliance 300.

When a certain period of time or greater has elapsed after the communication disconnection and the cooking status stored in the first wireless power transmission apparatus 100 is changed to "ready" as described above, the first wireless power transmission apparatus 100 may notify the cooking appliance 300 that the cooking status is "ready" and the cooking appliance 300 may not perform an additional operation.

In operation 3309, the cooking appliance 300 may resume the cooking based on the stored operation history information. When the cooking appliance 300 transmits the cooking status information to the first wireless power transmission apparatus 100 in operation 3310, the first wireless power transmission apparatus 100 may change the cooking status to "running" in operation 3311.

When the cooking appliance 300 transmits, to the first wireless power transmission apparatus 100, the control command based on the operation history information in operation 3312, the first wireless power transmission apparatus 100 may transmit power to the cooking appliance 300 according to the received control command in operation 3313.

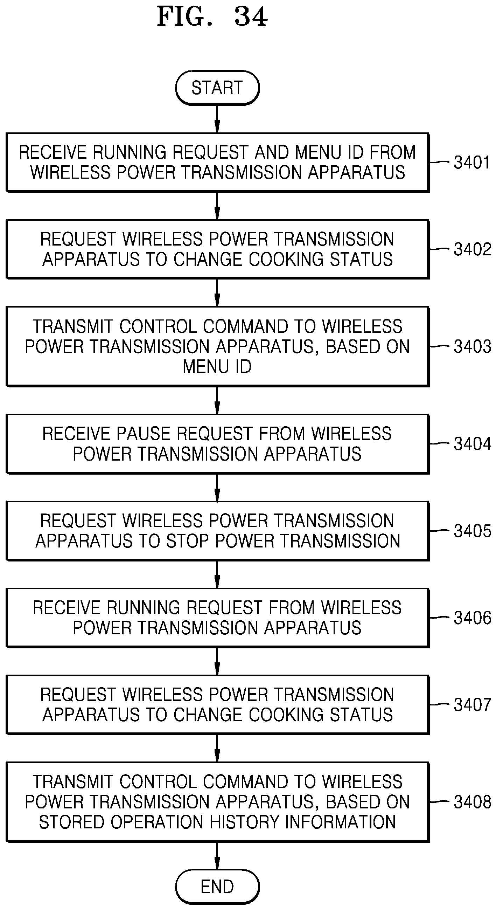

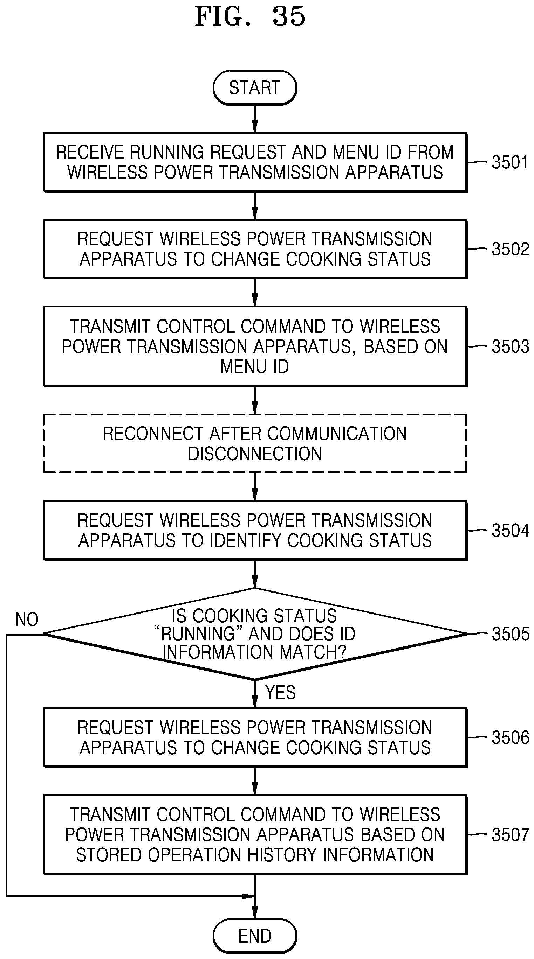

FIGS. 34 and 35 are flowcharts illustrating an example method by which a cooking appliance controls a wireless power transmission apparatus, according to an embodiment of the present disclosure. Operations included in the flowcharts of FIGS. 34 and 35 may be performed by the cooking appliance 300. FIG. 34 is a flowchart according to an embodiment in which the user temporarily stops cooking and then resumes the cooking during the cooking, according to various embodiments, and FIG. 35is a flowchart illustrating an example in which communication between the wireless power transmission apparatus 100 is temporarily disconnected and then reconnected during cooking according to various embodiments.

The flowcharts of FIGS. 34 and 35 are organized in terms of the cooking appliance 300 based on the processes described above with reference to FIGS. 25 to 33, and thus, details described above may also be applied to the flowcharts of FIGS. 34 and 35.

Referring to FIG. 34, the cooking appliance 300 may receive a running request and a menu ID from the wireless power transmission apparatus 100 in operation 3401. When the cooking appliance 300 transmits, to the wireless power transmission apparatus 100, a request to change a cooking status in operation 3402, the wireless power transmission apparatus 100 may change the cooking status to "running". According to an embodiment, the cooking appliance 300 may transmit cooking status information while transmitting the request to change a cooking status to the wireless power transmission apparatus 100, and accordingly, the wireless power transmission apparatus 100 may display an operating status on a user interface.

In operation 3403, the cooking appliance 300 may transmit a control command to the wireless power transmission apparatus 100 based on the received menu ID. According to an embodiment, the cooking appliance 300 may extract recipe information corresponding to the menu ID from a DB stored in the embedded memory 350, and transmit a control command for power transmission to the wireless power transmission apparatus 100 according to the recipe information.

When the user inputs, through the user interface of the wireless power transmission apparatus 100, a pause request for a cooking operation, the cooking appliance 300 may receive a pause request from the wireless power transmission apparatus 100 in operation 3404. Upon receiving the pause request from the wireless power transmission apparatus 100, the cooking appliance 300 may request the wireless power transmission apparatus 100 to stop power transmission in operation 3405. Because a power transmission operation of the wireless power transmission apparatus 100 is controlled by the cooking appliance 300, even when the wireless power transmission apparatus 100 receives the pause request, an operation of the wireless power transmission apparatus 100 is stopped through control by the cooking appliance 300.

When the user inputs, through the user interface of the wireless power transmission apparatus 100, a request to release a pause status and resume the cooking operation while the cooking operation is temporarily stopped by the pause request of the user, the cooking appliance 300 may receive the running request from the wireless power transmission apparatus 100 in operation 3406.

The cooking appliance 300 may transmit, to the wireless power transmission apparatus 100, a request to change a cooking status in operation 3407, and the wireless power transmission apparatus 100 may change the cooking status to "running". Also, according to an embodiment, the cooking appliance 300 may transmit the cooking status information to the wireless power transmission apparatus 100 and the wireless power transmission apparatus 100 may display the operating status on the user interface.

In operation 3408, the cooking appliance 300 may transmit the control command to the wireless power transmission apparatus 100 based on the stored operation history information, and the wireless power transmission apparatus 100 may transmit power to the cooking appliance 300 according to the control command. Here, the operation history information may be operation history information stored in the memory 350 of the cooking appliance 300 last before the pause request is received from the wireless power transmission apparatus 100 in operation 3404, and in this regard, the cooking appliance 300 may periodically or aperiodically store the operation history information in the memory 350 while the cooking operation is performed.

Referring to FIG. 35, the cooking appliance 300 may receive a running request and a menu ID from the wireless power transmission apparatus 100 in operation 3501. When the cooking appliance 300 transmits, to the wireless power transmission apparatus 100, a request to change a cooking status in operation 3502, the wireless power transmission apparatus 100 may change the cooking status to "running". According to an embodiment, the cooking appliance 300 may transmit cooking status information while transmitting the request to change a cooking status to the wireless power transmission apparatus 100, and accordingly, the wireless power transmission apparatus 100 may display an operating status on a user interface.

In operation 3503, the cooking appliance 300 may transmit a control command to the wireless power transmission apparatus 100 based on the received menu ID. According to an embodiment, the cooking appliance 300 may extract recipe information corresponding to the menu ID from a DB stored in the embedded memory 350, and transmit a control command for power transmission to the wireless power transmission apparatus 100 according to the recipe information.

In the embodiment of FIG. 35, it is assumed that a communication connection between the cooking appliance 300 and the wireless power transmission apparatus 100 is disconnected and then connected again due to removal of the cooking appliance 300 or the like after operation 3503.

When communication between the wireless power transmission apparatus 100 and the cooking appliance 300 are connected again, the cooking appliance 300 may request the wireless power transmission apparatus 100 to identify the cooking status in operation 3504. The cooking appliance 300 may also identify ID information corresponding to the cooking status stored in the wireless power transmission apparatus 100.

In operation 3505, the cooking appliance 300 determines whether the cooking status stored in the wireless power transmission apparatus 100 is "running" and ID information stored accordingly matches ID information of the cooking appliance 300.

When it is determined that the cooking status stored in the wireless power transmission apparatus 100 is "running" and the ID information stored accordingly matches the ID information of the cooking appliance 300, based on a result of the determination, the cooking appliance 300 may request the wireless power transmission apparatus 100 to change the cooking status in operation 3506. Accordingly, the wireless power transmission apparatus 100 may change the cooking status to "running".

In operation 3507, the cooking appliance 300 may transmit the control command to the wireless power transmission apparatus 100 based on the stored operation history information, and the wireless power transmission apparatus 100 may transmit power to the cooking appliance 300 according to the control command. Here, the operation history information may be operation history information stored in the memory 350 of the cooking appliance 300 last before the communication disconnection.

According to embodiments described above, even when a cooking appliance is moved to another wireless power transmission apparatus while the cooking appliance performs a cooking operation by being placed on any one of a plurality of wireless power transmission apparatuses, the wireless power transmission apparatuses are automatically linked and operated without a user having to input information for completing remaining cooking (e.g., a power level and cooking time required to complete cooking), and thus, user convenience may be increased.

A method, performed by the wireless power transmission apparatus 200, of performing a cooking operation, according to an embodiment of the present disclosure, includes detecting the cooking appliance 300, establishing a communication connection with the detected cooking appliance 300, obtaining operation history information corresponding to the cooking appliance 300, and transmitting power to the cooking appliance 300 based on the operation history information.

According to an embodiment, the operation history information may include recipe information and cooking status information, wherein the recipe information includes information about the amount of power to be transmitted and the duration of transmitting power to the cooking appliance 300 to cook a menu corresponding to the recipe information, and the cooking status information includes information about a cooking operation performed by the cooking appliance 300 until the cooking appliance 300 is detected.

According to an embodiment, the obtaining of the operation history information may include receiving, from the cooking appliance 300, the operation history information through wireless communication.

According to an embodiment, the obtaining of the operation history information may include obtaining ID information from the cooking appliance 300, transmitting the ID information to the other wireless power transmission apparatus 100 or the server 10 and requesting operation history information corresponding to the ID information, and obtaining the operation history information from the other wireless power transmission apparatus 100 or the server 10.

According to an embodiment, the obtaining of the operation history information may include requesting the server 10 for operation history information stored in the other wireless power transmission apparatus 100 that has stopped operating within a specified period of time from a time based on the cooking appliance 300 being detected, and obtaining the operation history information from the server 10.

According to an embodiment, the obtaining of the operation history information may include transmitting device information of the wireless power transmission apparatus 200 to the server 10 or the cooking appliance 300 and requesting the operation history information, and receiving, from the server 10 or the cooking appliance 300, the operation history information revised based on the device information.

According to an embodiment, in the operation history information revised based on the device information, a power transmission time included in the operation history information may be revised based on maximum output of the wireless power transmission apparatus 200, which is included in the device information.

According to an embodiment, the obtaining of the operation history information may include transmitting device information of the wireless power transmission apparatus 200 and sensing information of the cooking appliance 300 to the server 10 or the cooking appliance 300 and requesting the operation history information, and receiving, from the server 10 or the cooking appliance 300, the operation history information revised based on the device information and the sensing information.

According to an embodiment, in the operation history information revised based on the device information and the sensing information, the power transmission time included in the operation history information may be revised based on the maximum output of the wireless power transmission apparatus 200, which is included in the device information, and a result obtained by comparing a temperature of content included in the cooking appliance 300 at a time when cooking is stopped, which is included in the operation history information, with a temperature of the content included in the cooking appliance 300 at a time when the cooking appliance 300 is detected, which is included in the sensing information.

According to an embodiment, the transmitting of the power to the cooking appliance 300 may include obtaining remaining cooking information based on the operation history information, outputting the remaining cooking information through the user interface 210 of the wireless power transmission apparatus 200, and upon receiving a confirmation input of a user through the user interface 210, transmitting power to the cooking appliance 300 according to the remaining cooking information.

According to an embodiment, the detecting of the cooking appliance 300 may include, based on the cooking appliance 300 being removed from the other wireless power transmission apparatus 100 while performing the cooking operation by being placed on the other wireless power transmission apparatus 100, receiving a powering start request from the other wireless power transmission apparatus 100, starting powering according to the request, and detecting the cooking appliance 300 according to the powering.

The wireless power transmission apparatus 200 according to an embodiment of the present disclosure includes a user interface 210 configured to receive an input and display information about a cooking operation, at least one operating coil 221 configured to transmit power to the cooking appliance 300, a communication interface 230 configured to perform communication with at least one of the cooking appliance 300, a server 10, and another wireless power transmission apparatus 100, a memory 250 storing a program for performing the cooking operation by transmitting power to the cooking appliance 300, and at least one processor 240, wherein the at least one processor 240 is configured to execute the program to detect the cooking appliance 300, establish a communication connection with the detected cooking appliance 300, obtain operation history information corresponding to the cooking appliance 300, and transmit power to the cooking appliance 300 based on the operation history information.

According to an embodiment, the operation history information may include recipe information and cooking status information, wherein the recipe information includes information about the amount of power to be transmitted and the duration of transmitting power to the cooking appliance 300 to cook a menu corresponding to the recipe information, and the cooking status information includes information about a cooking operation performed by the cooking appliance 300 until the cooking appliance 300 is detected.

According to an embodiment, based on obtaining the operation history information, at least one processor 240 may be configured to receive, from the cooking appliance 300, the operation history information through wireless communication.

According to an embodiment, based on obtaining the operation history information, at least one processor 240 may be further configured to obtain ID information from the cooking appliance 300, transmit the ID information to the other wireless power transmission apparatus 100 or the server 10, request operation history information corresponding to the ID information, and obtain the operation history information from the other wireless power transmission apparatus 100 or the server 10.

According to an embodiment, based on obtaining the operation history information, at least one processor 240 may be configured to request the server 10 for operation history information stored in another wireless power transmission apparatus 100 that has stopped operating within a specified period of time from a time at which the cooking appliance 300 is detected, and obtain the operation history information from the server 10.

According to an embodiment, based on obtaining the operation history information, at least one processor 240 may be configured to request the server 10 or the cooking appliance 300 for the operation history information by transmitting device information of the wireless power transmission apparatus 200, and then receive, from the server 10 or the cooking appliance 300, the operation history information revised based on the device information.

According to an embodiment, in the operation history information revised based on the device information, a power transmission time included in the operation history information may be revised based on maximum output of the wireless power transmission apparatus 200, which is included in the device information.

According to an embodiment, based on obtaining the operation history information, at least one processor 240 may be configured to request the server 10 or the cooking appliance 300 for the operation history information by transmitting device information of the wireless power transmission apparatus 200 and sensing information of the cooking appliance 300, and receive, from the server 10 or the cooking appliance 300, the operation history information revised based on the device information and the sensing information.

According to an embodiment, in the operation history information revised based on the device information and the sensing information, the power transmission time included in the operation history information may be revised based on the maximum output of the wireless power transmission apparatus 200, which is included in the device information, and a result obtained by comparing a temperature of content included in the cooking appliance 300 at a time when cooking is stopped, which is included in the operation history information, with a temperature of the content included in the cooking appliance 300 at a time when the cooking appliance 300 is detected, which is included in the sensing information.

According to an embodiment, based on transmitting the power to the cooking appliance 300, at least one processor 240 may be configured to obtain remaining cooking information based on the operation history information, output the remaining cooking information through the user interface 210, and based on receiving a confirmation input through the user interface 210, transmit power to the cooking appliance 300 according to the remaining cooking information.

According to an embodiment, based on detecting the cooking appliance 300, at least one processor 240 may be configured to, based on the cooking appliance 300 being removed from the other wireless power transmission apparatus 100 while performing cooking operation by being placed on the other wireless power transmission apparatus 100, receive a powering start request from the other wireless power transmission apparatus 100, start powering according to the request, and detect the cooking appliance 300 according to the powering.

Various embodiments of the present disclosure may be implemented or supported by one or more computer programs, and the computer programs may be formed based on computer-readable program code and recorded on computer-readable media. In the present disclosure, an "application" and a "program" may denote one or more computer programs, software components, instruction sets, procedures, functions, objects, classes, instances, related data, or some thereof, which are suitable to be implemented by computer-readable program code. "Computer-readable program code" may include various types of computer code including source code, object code, and executable code. "Computer-readable media" may include various types of media accessible by a computer, such as read-only memory (ROM), random access memory (RAM), hard disc drive (HDD), compact disc (CD), digital video disc (DVD), or various types of memory.

A machine-readable storage medium may be provided in the form of a non-transitory storage medium. The "non-transitory storage medium" is a tangible device and may exclude wired, wireless, optical, or other communication links transmitting transitory electrical or other signals. The "non-transitory storage medium" does not distinguish a case where data is semi-permanently stored in a storage medium and a case where data is temporarily stored in a storage medium. For example, the "non-transitory storage medium" may include a buffer where data is temporarily stored. A computer-readable medium may be an arbitrary available medium accessible by a computer, and may include all volatile and non-volatile media and separable and non-separable media. The computer-readable medium includes a medium on which data may be permanently stored and a medium on which data may be stored and later overwritten, for example, a rewritable optical disc or an erasable memory device.

According to an embodiment, a method according to various embodiments disclosed herein may be provided by being included in a computer program product. The computer program products are products that can be traded between sellers and buyers. The computer program product may be distributed in the form of machine-readable storage medium (for example, a compact disc read-only memory (CD-ROM)), or distributed (for example, downloaded or uploaded) through an application store or directly or online between two user devices (for example, smartphones). In the case of online distribution, at least a part of the computer program product (for example, a downloadable application) may be at least temporarily generated or temporarily stored in a machine-readable storage medium, such as a server of a manufacturer, a server of an application store, or a memory of a relay server.

The above description of the present disclosure is provided for illustration, and it will be understood by one of ordinary skill in the art that various changes in form and details may be readily made therein without departing from essential features and the scope of the present disclosure including the following claims. For example, appropriate results may be achieved even when the described techniques are performed in an order different from the described method, and/or components, such as a system, a structure, a device, and a circuit, are combined or associated in a form different from the described method, or replaced by other components or equivalents. Accordingly, embodiments described above are examples in all aspects and are not limited. For example, each element described as a single type may be implemented in a distributed manner, and similarly, elements described as distributed may be implemented in a combined form.

The scope of the present disclosure is not limited by the detailed description, and all changes or modifications within the scope of the appended claims and their equivalents will be understood as being included in the scope of the present disclosure.

## Claims

1. A method, performed by a wireless power transmission apparatus (200), of performing a cooking operation, the method comprising:
detecting a cooking appliance (300);
establishing a communication connection with the detected cooking appliance (300);
obtaining operation history information corresponding to the cooking appliance (300); and
transmitting power to the cooking appliance (300) based on the operation history information.

2. The method of claim 1, wherein the operation history information comprises recipe information and cooking status information,
wherein the recipe information includes information about an amount of power to be transmitted and a duration of transmitting power to the cooking appliance (300) to cook a menu corresponding to the recipe information, and
the cooking status information includes information about a cooking operation performed by the cooking appliance (300) until the cooking appliance (300) is detected.

3. The method of any one of claims 1 and 2, wherein the obtaining of the operation history information comprises receiving, from the cooking appliance (300), the operation history information through wireless communication.

4. The method of any one of claims 1 to 3, wherein the obtaining of the operation history information comprises:
obtaining identification (ID) information from the cooking appliance (300);
transmitting the ID information to another wireless power transmission apparatus (100) or a server (10) and requesting operation history information corresponding to the ID information; and
obtaining the operation history information from the another wireless power transmission apparatus (100) or the server (10).

5. The method of any one of claims 1 to 4, wherein the obtaining of the operation history information comprises:
transmitting device information of the wireless power transmission apparatus (200) to the server (10) or the cooking appliance (300) and requesting the operation history information; and
receiving, from the server (10) or the cooking appliance (300), the operation history information revised based on the device information.

6. The method of any one of claims 1 to 5, wherein, in the operation history information revised based on the device information, a power transmission time included in the operation history information is revised based on maximum output of the wireless power transmission apparatus (200), which is included in the device information.

7. The method of any one of claims 1 to 6, wherein the obtaining of the operation history information comprises:
transmitting device information of the wireless power transmission apparatus (200) and sensing information of the cooking appliance (300) to the server (10) or the cooking appliance (300) and requesting the operation history information; and
receiving, from the server (10) or the cooking appliance (300), the operation history information revised based on the device information and the sensing information.

8. The method of any one of claims 1 to 7, wherein, in the operation history information revised based on the device information and the sensing information, the power transmission time included in the operation history information is revised based on the maximum output of the wireless power transmission apparatus (200), which is included in the device information, and a result obtained by comparing a temperature of content included in the cooking appliance (300) at a time at which cooking is stopped, which is included in the operation history information, with a temperature of the content included in the cooking appliance (300) at a time at which the cooking appliance (300) is detected, which is included in the sensing information.

9. The method of any one of claims 1 to 8, wherein the transmitting of the power to the cooking appliance (300) comprises:
obtaining remaining cooking information based on the operation history information;
outputting the remaining cooking information through a user interface (210) of the wireless power transmission apparatus (200); and
based on receiving a confirmation input through the user interface (210), transmitting power to the cooking appliance (300) according to the remaining cooking information.

10. A non-transitory computer-readable recording medium having recorded thereon a program for executing, on a computer, the method of any one of claims 1 to 9.

11. A wireless power transmission apparatus (200) comprising:
a user interface (210)comprising circuitry configured to receive an input and display information about a cooking operation;
at least one operating coil (221) configured to transmit power to a cooking appliance (300);
a communication interface (230)comprising circuitry configured to perform communication with at least one of the cooking appliance (300), a server (10), and another wireless power transmission apparatus (100);
a memory (250) storing a program including instructions for performing the cooking operation by transmitting power to the cooking appliance (300); and
at least one processor, comprising processing circuitry (240),
wherein the at least one processor, individually and/or collectively, (240) is configured to execute the program and to cause the apparatus to: detect the cooking appliance (300), establish a communication connection with the detected cooking appliance (300), obtain operation history information corresponding to the cooking appliance (300), and transmit power to the cooking appliance (300) based on the operation history information.

12. The wireless power transmission apparatus (200) of claim 11, wherein
the operation history information comprises recipe information and cooking status information,
wherein the recipe information includes information about an amount of power to be transmitted and a duration of transmitting power to the cooking appliance (300) to cook a menu corresponding to the recipe information, and
the cooking status information includes information about a cooking operation performed by the cooking appliance (300) until the cooking appliance (300) is detected.

13. The wireless power transmission apparatus (200) of any one of claims 11 and 12, wherein, based on obtaining the operation history information, the at least one processor, individually and/or collectively, (240) is configured to receive, from the cooking appliance (300), the operation history information through wireless communication.

14. The wireless power transmission apparatus (200) of any one of claims 11 to 13, wherein, based on obtaining the operation history information, the at least one processor, individually and/or collectively, (240) is configured to obtain identification (ID) information from the cooking appliance (300), transmit the ID information to the other wireless power transmission apparatus (100) or the server (10), request operation history information corresponding to the ID information, and obtain the operation history information from the other wireless power transmission apparatus (100) or the server (10).

15. The wireless power transmission apparatus (200) of any one of claims 11 to 14, wherein, based on transmitting the power to the cooking appliance (300), the at least one processor, individually and/or collectively, (240) is configured to:
obtain remaining cooking information based on the operation history information;
output the remaining cooking information through the user interface (210); and
based on receiving a confirmation input through the user interface (210), transmit power to the cooking appliance (300) according to the remaining cooking information.
